# EUROPEAN PATENT SPECIFICATION

(11) **EP 4 484 888 B1**
(45) Date of publication and mention of the grant of the patent: **13.05.2026**
(21) Application number: 24179955.0
(22) Date of filing: 04.06.2024
(51) Int. Cl.: G01C 15/00

(54) **MOTOR CONTROLLED LASER LEVEL ASSEMBLY**
MOTORGESTEUERTE LASERNIVELLIERVORRICHTUNG
ENSEMBLE DE NIVEAU LASER COMMANDÉ PAR MOTEUR

(30) Priority: 06.06.2023 US 202363506445 P
(43) Date of publication of application: 01.01.2025
(73) Proprietor: Stanley Black & Decker, Inc., New Britain, CT 06053 (US)
(72) Inventor: SERGYEYENKO, Oleksiy P., 21013 Baldwin (US); WOLF, Thomas S., 21128 Perry Hall (US); JHAWAR, Devansh K., 21201 Baltimore (US); SCHMITTDIEL, Michael S., 21231 Baltimore (US); CHANG, Kun, Suzhou (CN); LEONE, Dominic M., 21208 Baltimore (US); NORR, Kenneth M., 21093 Timonium (US); JAIN, Kavya, 21093 Timonium (US); TOPF, Anthony, 21009 Abingdon (US)
(74) Representative: Slingsby Partners LLP

(56) References cited:
- EP-B1- 2 938 962
- US-A- 5 903 345
- US-A1- 2021 285 767

## Description

The present invention relates to construction tools such as a construction laser level.

There are various existing laser levels. It is desired to provide a laser level assembly with a unique construction.

US 2021/0285767 describes a laser level system including a laser level, the laser level projecting at least one laser line. The system also includes a bracket on which the laser level is mounted and a battery pack. The bracket includes a battery pack receptacle into which the battery pack is removably coupled. The battery pack powers the laser level. The battery pack has a maximum initial battery pack voltage (measured without a workload) of at least 18 volts. The system also includes at least one electrical conductor which delivers power from the battery pack in the battery pack receptacle to the laser level.

According to a first aspect, the present disclosure provides a laser level assembly according to Claim 1 of the appended claims.

Preferred, and other optional, features of the disclosure are described and defined in the dependent claims.

According to one example, the present disclosure describes a laser level assembly, comprising: a mount; a rotational base; a laser level on the rotational base; wherein the laser level and the rotational base are rotatable about a first axis relative to the mount; and wherein the laser level is rotatable about a second axis relative to the mount and the rotational base; wherein rotation of the laser level about the second axis is driven by a motor.

The laser level assembly may further comprise a battery powering the motor.

The laser level assembly may further comprise a controller configured to control operation of the motor.

The laser level assembly may further comprise a wireless transceiver configured to receive wireless control signals.

According to another example, there is a laser level assembly, comprising a mount; a rotational base; a laser level on the rotational base; wherein the laser level and the rotational base are rotatable about a first axis relative to the mount; and wherein the laser level is rotatable about a second axis relative to the mount and the rotational base; wherein rotation of the laser level about the first axis is driven by a first motor; and wherein rotation of the laser level about the second axis is driven by a second motor.

The first motor may be disposed in the mount.

The second motor may be disposed in the rotational base.

The laser level assembly may further comprise a removable battery pack powering the first motor and the second motor.

The laser level assembly may further comprise a controller configured to control operation of the motor.

The laser level assembly may further comprise a wireless transceiver configured to receive wireless control signals.

According to another example, there is an exemplary embodiment of a laser level assembly, comprising: a mount comprising a mounting portion and a base portion transverse to the mounting portion, wherein the mounting portion is configured to be secured to a surface; a rotational base on the base portion of the mount; a laser level on the rotational base; wherein the laser level comprises a first vertical beam; a second vertical beam and a first horizontal beam; wherein the laser level is rotatable about a first axis; wherein the laser level is rotatable about a second axis; wherein the second axis is at a cross point of the first vertical beam and the second vertical beam; wherein rotation of the laser level about the first axis is driven by a first motor; and wherein rotation of the laser level about the second axis is driven by a second motor.

The first motor may be disposed in the mount.

The second motor may be disposed in the rotational base.

The laser level assembly may further comprise a removable battery pack powering the first motor and the second motor.

The laser level assembly may further comprise a controller configured to control operation of the motor.

The laser level assembly may further comprise a wireless transceiver configured to receive wireless control signals.

The mounting portion of the mount may include magnets.

According to another example, there is an exemplary embodiment of laser level assembly including: a mounting bracket; a laser level; and a motor; wherein the mounting bracket includes a mounting portion and a base portion transverse to the mounting portion; wherein the laser level is disposed on the base portion; and wherein the base portion is configured for vertical translation relative to the mounting portion; and wherein the motor drives the vertical translation of the base portion.

The motor may be mounted in the mounting bracket.

The laser level assembly may further comprise a rack and a pinion engaged with the rack.

The motor may drive rotation of the pinion.

The rack may be on the mounting portion of the mounting bracket.

The mounting bracket may further comprise a bottom portion.

The bottom portion may be parallel to the base portion.

The bottom portion may include a screw thread mount.

The rack may extend in a vertical direction along the mounting portion.

The rack may extend along a central portion of the mounting portion.

The rack may extend along a side of the mounting portion.

According to another example, there is an exemplary embodiment of a laser level assembly including a mounting bracket comprising a mounting portion and a base portion transverse to the mounting portion; a laser level; and a first motor configured to drive vertical translation of the laser level relative to the mounting portion of the mounting bracket; and a second motor configured to drive rotational motion of the laser level about a vertical axis.

The first motor may be disposed in the mounting bracket.

The second motor may be disposed in the mounting bracket.

The laser level assembly may further include a rack and a pinion.

According to another example, there is an exemplary embodiment of a laser level assembly including: a mounting bracket comprising a mounting portion and a base portion transverse to the mounting portion; a laser level on the mounting bracket; and a ceiling wall mount. The mounting bracket is connected to the ceiling wall mount at the mounting portion. The mounting bracket includes a motor and a pinion driven by the motor. The ceiling wall mount includes a rack engaged with the pinion. Rotation of the motor causes the mounting bracket to translate in a vertical direction relative to the ceiling wall mount.

The ceiling wall mount may include a metal plate.

The mounting portion may include magnets, and attraction between the magnets and the metal plate connect the mounting bracket to the ceiling wall mount.

The rack may extend along an edge of the metal plate.

The rack may extend along opposite edges of the metal plate.

The mounting bracket may further include a rotational motor which selectively drives rotational motion of the laser level about a vertical axis.

According to an aspect of an example embodiment, a laser level assembly includes: a mounting bracket comprising an attachment bracket and a movable bracket; a laser level mounted on the movable bracket, the laser level configured to project at least one of a horizontal line, a vertical line or a laser spot; a motor in the movable bracket, wherein the motor is configured to drive movement of the movable bracket relative to the attachment bracket; and a clutch operatively associated with the motor.

The laser level assembly may further include a pinion driven by the motor.

The clutch may be operatively between the motor and the pinion.

The attachment bracket may include a rack.

The pinion may be engaged with the rack.

The attachment bracket may further include a door that is movable between an open position and a closed position. When the door is in the closed position, the door blocks the pinion from disengagement from the rack. Wherein when the door is in the open position, the door does not block the pinion from disengagement from the rack.

The movable bracket may include a biasing member that biases the movable bracket away from the attachment bracket to facilitate movement of the movable bracket relative to the attachment bracket.

The door may be at a top end of the attachment bracket.

The attachment bracket may include magnets.

The movable bracket may include a battery receptacle configured to receive a battery pack.

According to an example, a laser level assembly includes: an attachment bracket; a movable bracket attached to the attachment bracket and configured to translate relative to the attachment bracket; a laser level mounted on the movable bracket, the laser level configured to project at least one of a horizontal line, a vertical line or a laser spot; a motor in the movable bracket, wherein the motor is configured to drive translation of the movable bracket relative to the attachment bracket; further comprising a clutch operatively associated with the motor.

The laser level assembly may further include a pinion driven by the motor.

The clutch may be operatively between the motor and the pinion.

The attachment bracket may further include a rack.

The clutch may include a first clutch part with first teeth and a second clutch part with second teeth. The first teeth and second teeth may be selectively engaged.

The pinion may be integral with the second clutch part.

The attachment bracket may include a rack.

According to an example, a laser level assembly includes: a mounting bracket comprising an attachment bracket and a movable bracket; a laser level mounted on the movable bracket, the laser level configured to project at least one of a horizontal line, a vertical line or a laser spot; a motor in the movable bracket, wherein the motor is configured to drive movement of the movable bracket relative to the attachment bracket; and a pinion driven by the motor. The attachment bracket may include a rack. The pinion may be engaged with the rack. The attachment bracket may include a door that is movable between an open position and a closed position. When the door is in the closed position, the door blocks the pinion from disengagement from the rack. When the door is in the open position, the door does not block the pinion from disengagement from the rack.

The movable bracket may include a biasing member that biases the movable bracket away from the attachment bracket to facilitate movement of the movable bracket relative to the attachment bracket.

It is to be understood that any feature, including any preferred or other optional feature, of any aspect or embodiment of the disclosure or invention may be a feature, including a preferred or other optional feature, of any other aspect or embodiment of the disclosure or invention.

The invention will now be described, by way of example, with reference to the accompanying figures, of which:
Fig. 1 illustrates a perspective view of an exemplary embodiment of a laser level assembly;
Fig. 2 illustrates a top view of an exemplary embodiment of a laser level assembly;
Fig. 3 illustrates another top view of an exemplary embodiment of a laser level assembly;
Fig. 4 is a bottom perspective view of an exemplary embodiment of a lower housing section;
Fig. 5 is a top view of an exemplary embodiment of a lower housing section;
Fig. 6 is a top perspective view of an exemplary embodiment of the rotational base;
Fig. 7 is a bottom perspective view of an exemplary embodiment of a top section of the rotational base;
Fig. 8 is a bottom perspective view of an exemplary embodiment of a top section of the rotational base;
Fig. 9 is a bottom perspective view of an exemplary embodiment of the rotational base;
Fig. 10 is an internal perspective view of an exemplary embodiment of the rotational base;
Fig. 11 is an internal perspective view of an exemplary embodiment of the rotational base;
Fig. 12 is a top view of an exemplary embodiment of a laser module;
Fig. 13 is a perspective view of an exemplary embodiment of a laser module; and
Fig. 14 is schematic diagram.
Fig. 15 illustrates a side view of an exemplary embodiment of a laser level assembly;
Fig. 16 is a side view of the exemplary embodiment of the laser level assembly with the ceiling wall mount separated from the mounting bracket;
Fig. 17 is a perspective view of an exemplary embodiment of a laser level assembly;
Fig. 18 is a perspective view an exemplary embodiment of a laser level assembly;
Fig. 19 is a perspective cut-away view of an exemplary embodiment of a laser level assembly;
Fig. 20 is a side cut-away view of an exemplary embodiment of a laser level assembly;
Fig. 21 is a bottom cut-away view of an exemplary embodiment of a laser level assembly through a portion of the bottom of the mounting bracket;
Fig. 22 is an exploded view of parts of an exemplary embodiment of a laser level assembly;
Fig. 23 is a close-up view of a rotational driving feature an exemplary embodiment of a laser level assembly;
Fig. 24 is a side view of an exemplary embodiment of a laser level assembly;
Fig. 25 is a perspective view of an exemplary embodiment of a laser level assembly;
Fig. 26 is a side view of an exemplary embodiment of a ceiling mount;
Fig. 27 is a side view of an exemplary embodiment of a laser level assembly;
Fig. 28 is a side view of an exemplary embodiment of a laser level assembly;
Fig. 29 is a side view of an exemplary embodiment of a laser level assembly;
Fig. 30 is a side view of an exemplary embodiment of a laser level assembly;
Fig. 31 is a side view of an exemplary embodiment of a laser level assembly;
Fig. 32 is a perspective view of an exemplary embodiment of a laser level assembly;
Fig. 33 is a perspective view of an exemplary embodiment of a remote control;
Fig. 34 illustrates a top view of an exemplary embodiment of a laser level assembly;
Fig. 35 illustrates a top view of an exemplary embodiment of a laser level assembly;
Fig. 36 illustrates a top view of an exemplary embodiment of a laser level assembly;
Fig. 37 is a perspective view of an exemplary embodiment of a laser level assembly;
Fig. 38 is a perspective view of an exemplary embodiment of a laser level assembly;
Fig. 39 is an exploded side-view of an exemplary embodiment of a laser level assembly;
Fig. 40 is a cross-sectional side-view of an exemplary embodiment of a laser level assembly;
Fig. 41 is a cross-sectional side-view of a portion of an exemplary embodiment of a laser level assembly;
Fig. 42 is a perspective view of an exemplary embodiment of a drive unit;
Fig. 43 is a perspective view of an exemplary embodiment of a drive unit and laser level assembly;
Fig. 44 is a perspective bottom view of an exemplary embodiment of a drive unit;
Fig. 45 is a perspective side view of an exemplary embodiment of a drive unit;
Fig. 46 is a perspective view of an exemplary embodiment of an attachment bracket;
Fig. 47 is a rear perspective view of an exemplary embodiment of a laser level assembly;
Fig. 48 is a side perspective view of a portion of an example embodiment of a laser level assembly;
Fig. 49 is a side perspective view of a portion of an example embodiment of a laser level assembly;
Fig. 50 is a side perspective view of a portion of an example embodiment of a laser level assembly;
Fig. 51 is a side perspective view of a portion of an example embodiment of a laser level assembly;
Fig. 52 is a side cross-sectional view of a portion of an example embodiment of a laser level assembly;
Fig. 53 is a cross-sectional view of a portion of an example embodiment of a laser level assembly;
Fig. 54 is a perspective view of a motor and clutch assembly of an example embodiment of a laser level assembly;
Fig. 55 is an exploded view of a motor and clutch assembly of an example embodiment of a laser level assembly;
Fig. 56 is a rear view of an example embodiment of a mount of an example embodiment of a laser level assembly; and
Fig. 57 is a cross-sectional view of a portion of an example embodiment of a laser level assembly.

The drawings are for the purpose of illustration and description only and are not intended as a definition of the limits of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

All closed-ended (e.g., between A and B) and open-ended (greater than C) ranges of values disclosed herein explicitly include all ranges that fall within or nest within such ranges. For example, a disclosed range of 1-10 is understood as also disclosing, among other ranged, 2-10, 1-9, 3-9, etc.

As used herein, the terminology "at least one of A, B and C" and "at least one of A, B or C" each mean any one of A, B or C or any combination of A, B and C. For example, at least one of A, B and C may include only A, only B, only C, A and B, A and C, B and C, or A, B and C.

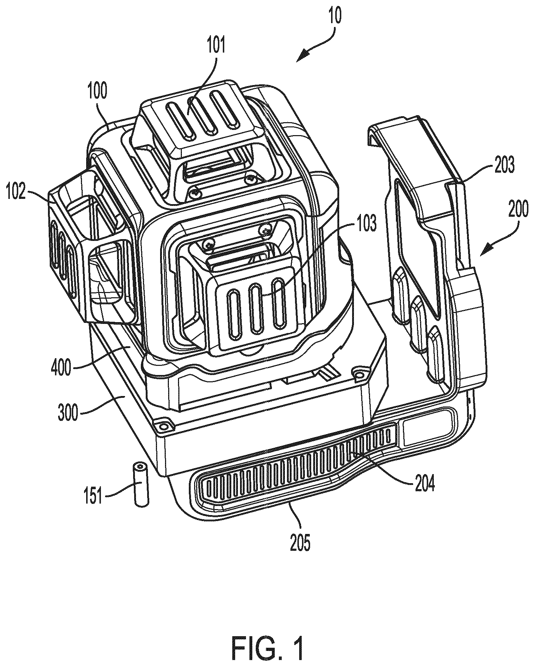

Fig. 1 illustrates a perspective view of a non-limiting, exemplary embodiment of a laser level assembly 10 of the present application. The laser level assembly 10 of Fig. 1 includes a 3 x 360 laser level 100. The laser level 100 produces two vertical laser beams and one horizontal laser beam. As shown in Fig. 1, the laser level 100 includes three laser projectors 101, 102 and 103. The three laser projectors project three perpendicular laser beams.

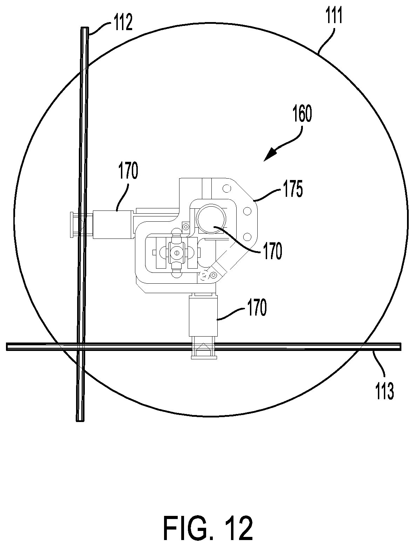

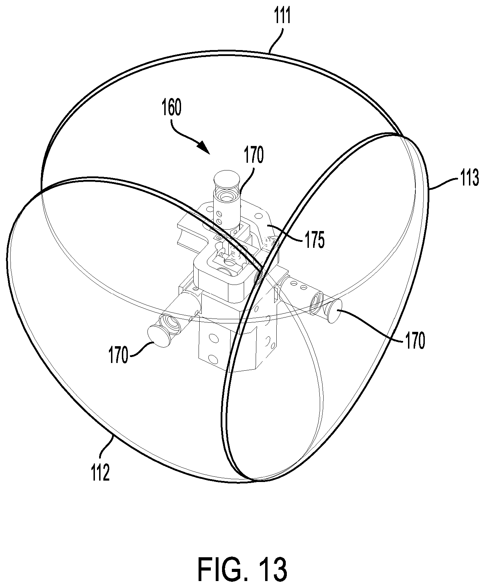

Figs. 12 and 13 illustrate a laser module assembly 160 which produces the laser lines 111, 112 and 113 that project out of the three laser projectors 101, 102 and 103, respectively. The laser module assembly 160 is housed in the housing 110 of the laser level 100. The laser module assembly 160 includes three laser modules 170. The three laser modules 170 are carried on a pendulum assembly 175. Each laser module includes a laser generator such as a laser diode and a reflector such as a cone reflector. The laser diode produces a laser beam which is reflected off the surface of the reflective cone to project laser lines 111, 112, and 113 at the three laser projectors 101, 102 and 103.

The pendulum assembly 175 rotates about a relatively small angle so that the laser modules 170 project beams in the horizontal and vertical planes when placed on a surface that is not entirely horizontally flat. For example, if the laser level 10 is placed on a surface that is sloped five degrees (5 degrees) with respect to horizontal, the pendulum assembly 175 will tilt under the influence of gravity so that the laser modules 170 are aligned to produce a laser line 111 in a horizontal plane and laser lines 112 and 113 in vertical planes. Additionally, in some embodiments the laser level 100 includes a locking device to lock the pendulum assembly 175. In those instances the pendulum assembly 110 will be locked in a particular position rather than allowed to rotate under the influence of gravity and it may produce laser lines offset from the vertical and horizontal.

The laser lines 111, 112, 113 project out from the laser level 100 onto walls, floors ceilings or other surfaces. As there are three beams which project in a circular pattern, the laser level 100 may be referred to as a 3x360 laser level. When the laser level assembly 10 is attached to a vertical wall at the mounting portion 203, the laser level 100 produces two vertical laser lines and one horizontal laser line. Similarly, when the laser level assembly is placed on a flat horizontal surface, the laser level 100 produces two vertical laser lines and one horizontal laser line. In some instances, the laser level 100 may be considered to be located at a front of the laser level assembly 10 and the mounting portion 203 at the back of the laser level assembly 10.

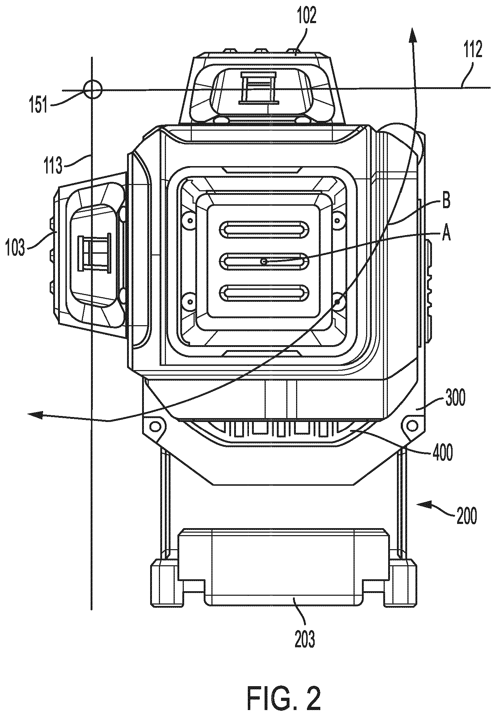

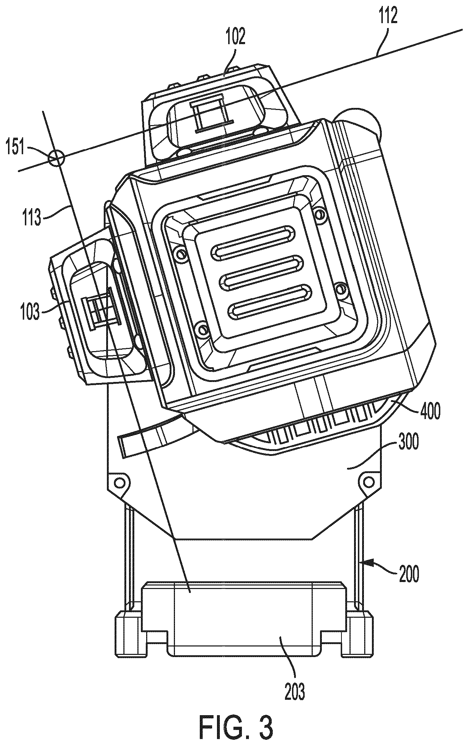

Figs. 1-3 illustrate various views of the laser level assembly 10. Fig. 1 is a perspective view of the laser level assembly 10 and Figs. 2 and 3 are top views of the laser level assembly 10. The laser level assembly 10 includes the laser level 100. The laser level 100 is situated on a rotational base 300. The laser level 100 and the rotational base 300 are mounted on a bracket 200. The bracket 200 has a mounting portion 203, a base portion 204, and a bottom of the mount 205 at the bottom of the base portion 204. The mounting portion 203 may include magnets so that the bracket 200 can be secured to a metal part such as metal beam, metal stud, metal cabinet or other structure. In other embodiments, the mounting portion 203 may have another securing mechanism instead of or in addition to magnets, such as a clamp, tie, strap or other securing structure.

In operation, the laser level 100 and rotational base 300 may move together about a central axis of the laser level 100 relative to the mount 200. The central axis "A" of the laser level 100 is a vertical axis through the projector 101. In this case, all three projectors 101, 102 and 103 rotate about the central axis. Since the projector 101 projects a horizontal line 111, rotation about a vertical axis does not affect the location of the line 111. That is, a horizontal line 111 remains horizontal. The vertical lines 112 and 113 rotate about the central vertical axis A. Both vertical lines as well as a cross point 151 at which the vertical lines 112 and 113 intersect rotate about the vertical axis Z.

The laser level 100 may also be rotated relative to the rotational base 300. In that instance, the rotational base 300 remains stationary relative to the mount 200. The laser level 100 rotates relative to the rotational base about the cross-point 151. In this instance, the vertical lines 112 and 113 move as they rotate about the cross-point 151. However, a position of the cross-point 151 remains the same since the vertical lines 112 and 113 rotate about the cross point. As with rotation about central axis A, when the laser level 100 rotates about the cross-point 151, the projector 101 continues to project a horizontal line 111 in a horizontal plane regardless of the rotational position.

Rotation of the laser level 100 about the cross-point 151 is shown in Figs. 2 and 3. As shown in Fig. 2, the laser level 100 can rotate about cross-point 151 in the rotational direction "B". As shown by arrow B, the laser level 100 may rotate in either a clockwise or counterclockwise direction. Figs. 2 and 3 are top view of the laser level assembly 10. Fig. 2 illustrates the laser level 100 in a starting position. In this position, the laser level 100 is aligned with the rotational base 300 and the mount 200. For example, the vertical line 111 is parallel to side surfaces of the mount 200. In the starting position, vertical line 112 is parallel to a mounting surface on which the mounting portion 203 is secured if the mounting surface is a flat vertical surface such as a wall.

Fig. 3 illustrates the laser level 100 rotated about the cross-point 151 relative to the starting position shown in Fig. 2. As shown in Fig. 3, the laser level 100 is rotated relative to the rotational base 300. The orientation of the vertical laser lines 112 and 113 also change. For example, when the mounting portion 203 is secured to a flat vertical mounting surface, laser line 112 is no longer parallel to sides of the mount 200 and vertical line 112 is no longer parallel to the mounting surface, but instead are at angles with respect to such surfaces. As also shown, the laser level 100 is angled with respect to the rotational base 300. While the position of the projector 101 has moved in Fig. 3 relative to Fig. 2, the projector 101 continues to project a horizontal line 111 in the same horizontal plane whether in the rotational position of Fig. 2 or Fig. 3.

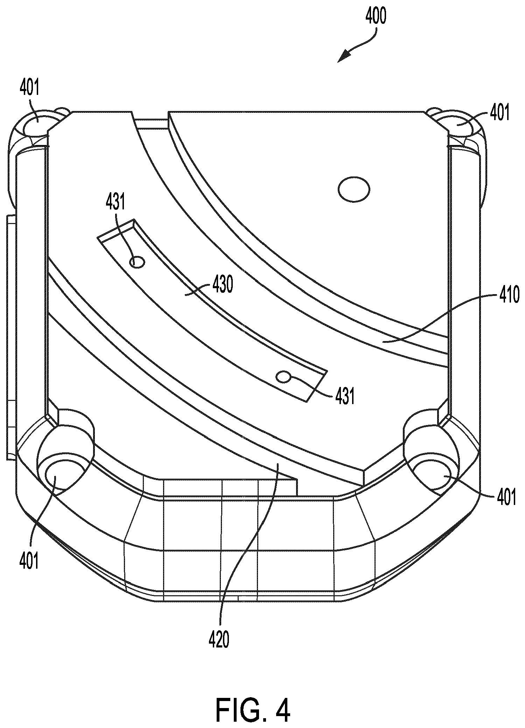

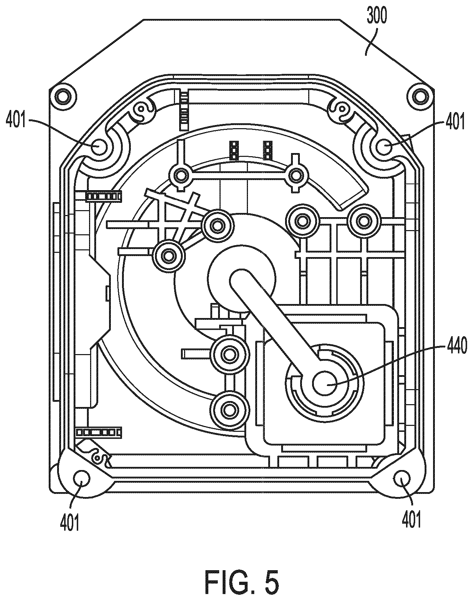

Figs. 4 and 5 illustrate a lower housing section 400 of the laser level 100. Fig. 4 is a bottom view of the lower housing section 400. The surfaces shown in Fig. 4 face downwardly towards the rotational base 300. Fig. 5 is a top view of the lower housing section 400, as would be seen looking down at the lower housing from an inside of a housing the laser level 100.

As shown in Fig. 4. The lower housing section 400 has a first guide way 410, a second guide way 420 and an arc gear connection slot 430. The arc gear connection slot 430 includes a pair of connection through holes 431. The connection through holes 431 each accommodate a fastener or connector and may be threaded. The lower housing section also includes a hole 440 through which cables may pass. The cables may be wires and may carry electric power or information/data. The lower housing section 400 also includes screw thread holes 401 at each corner. The thread holes 401 allow the lower housing section 400 to be screwed onto the remainder of the housing for the laser level 100. In other embodiments, the lower housing section 400 may be attached in other ways, may be integrally formed with other parts of the laser level 100 housing or various other clam-shell arrangements or attachments may be implemented.

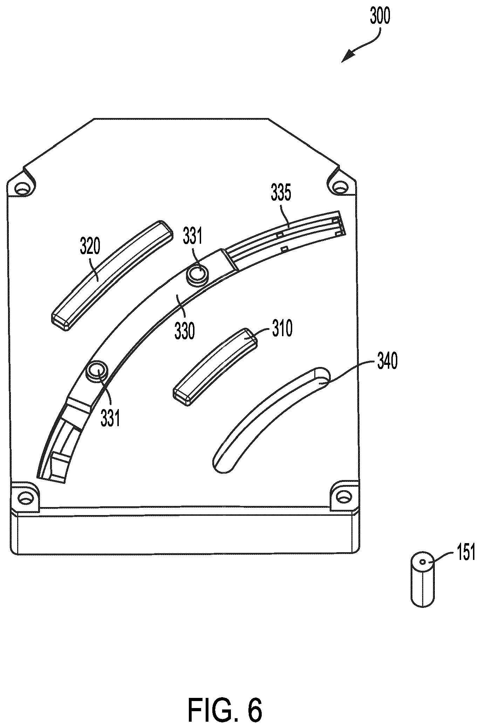

Fig. 6 is a top perspective view of the rotational base 300. As shown, the rotational base 300 includes a first guideway boss 310. The first guideway boss 310 engages and sits in the first guide way 410 and can move within the first guide way 410 illustrated in Fig. 4. The rotational base 300 also includes a second guideway boss 320. The second guideway boss 310 engages and sits in the second guide way 420 illustrated in Fig. 4 and can move within the second guide way 420. The rotational base further includes an arc gear 330 that is movable within an arc gear slot 335. The arc gear 330 is attached to the lower housing section 400 at the arc gear connection slot 430. The arc gear 330 may be secured to the slot 430 via connection through holes 331 on the arc gear 330 and connection through holes 431 in the arc connection slot 430. For example, fasteners may be inserted through the holes to securely fasten the arc gear 330 to the arc gear connection slot 430. These may be threaded fasteners, rivets or other connectors. The arc gear 330 may be secured to the arc gear connection slot 430 by other means.

The complementary structures of the lower housing 400 and the rotational base 300 allow for relative movement of the lower housing 400, and thus the laser level 100 generally, with respect to the rotational base 300. In particular, if the arc gear 330 moves in the arc gear slot 335, the lower housing 400 moves along with the arc gear 330 owing to the connection of the arc gear 330 with the lower housing 400. The bosses 310 and 330 slide along the respective guide ways 410 and 420. In this way, the arc gear 330 can be moved and cause the laser level 100 to rotate relative to both the rotational base 300 and the mount 200. When the arc gear 330 is moved within the slot 335 and the mount 200 is secured in place, the laser level 100 rotates such as between the positions shown in Fig. 2 and 3.

As shown in Fig. 6, the rotational base 300 also includes a cable transfer slot 340. The cable transfer slot 340 provides room for cables. Cables may carry electrical power or information/data. The cable transfer slot 340 may vary in size, shape, length or other dimensions and may include one or more through holes. Fig. 6 also illustrates the cross point 151. The arc gear 330 rotates in an arc about the axis 151. As shown, the axis 151 is outside of the footprint of the rotational base 300.

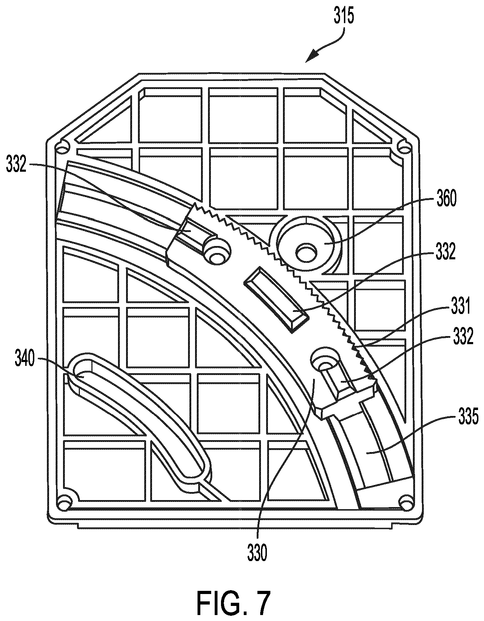

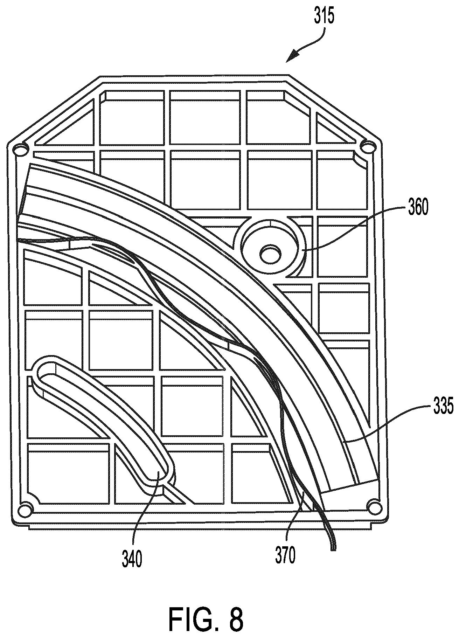

Figs. 7 and 8 illustrate the top section 315 of the rotational base 300. Fig. 7 and 8 are each perspective bottom view of the top section. The top section 315 of the rotational base 300 may be integrally formed with the rest of the rotational base 300 or may be attached through screws or other fasteners or fastening or attachment structures. Fig. 7 illustrates the top section 315 of the rotational base 300 with the arc gear 330 in the slot 335. As shown, the arc gear 330 includes a plurality of gear teeth 331 and several bosses 332. As shown, there is also a recess 368 for receiving a spur gear. As discussed below, a spur gear rotates and teeth of the spur gear interact with the gear teeth 331 in order to move the arc gear 330.

Fig. 8 illustrates the top section 315 with a biasing spring 370. The arc gear 330 is not illustrated in Fig. 8 for purposes of explanation. In an embodiment, the biasing spring 370 presses the arc gear 330 towards the spur gear to facilitate engagement between the gears. In some embodiments, other biasing members may be used instead of a spring 370 or engagement may be facilitated solely by the alignment by the respective tracks and recesses.

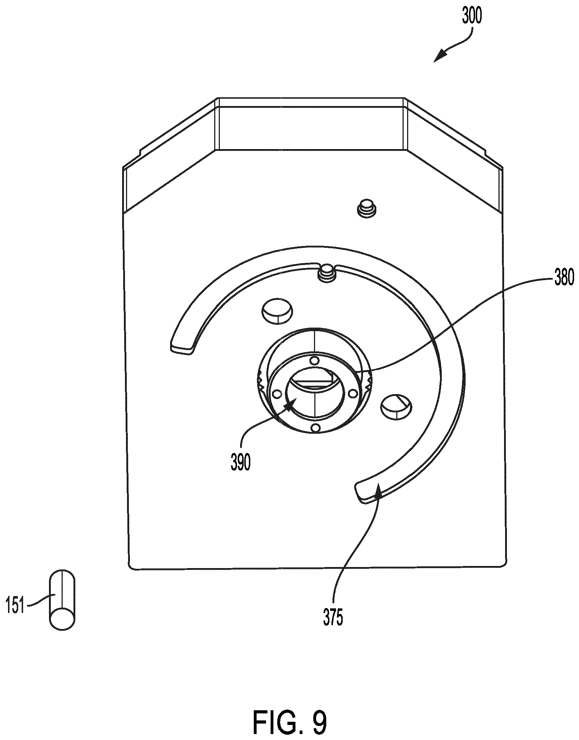

Fig. 9 is a perspective bottom view of the rotational base 300. As shown, the rotational base 300 has a mounting cylinder 380 with a central cable transfer hole 390. The rotational base 300 also has a central rotation guide way 375. The mounting cylinder 380 engages with the mount 200 and is aligned about the central axis A. The central rotation guide way 375 is similarly aligned about the central axis A. The cable transfer hole 390 allows cables to travel from the mount to the rotational base 300. Cables may also travel through or from the rotational base 300 to the laser level 100.

The mount 200 has a guide way boss that engages the central rotation guide way 375. The mount 200 includes a gear, belt, friction, direct drive that transfers rotational motion to the rotational base 300 so that the rotational base 300 rotates about the mounting cylinder 380 about central axis A, as described above. The laser level 100 moves along with the rotational base 300 when the rotational base 300 rotates about the central axis A. The central rotation guide way 375 may limit rotation of the rotational base 300.

In an exemplary embodiment, the mount 200 includes a motor. The motor includes an output that is engaged with the mounting cylinder 380. The motor output may be engaged with the mounting cylinder 380 through a threaded connection. A user can control the motor housed in the mount 200 and as the motor turns, the motor output rotates the rotational base 300 and so the laser level 100 about the central axis A. In some embodiments, there may be a transmission between the motor and the mounting cylinder 380. In other embodiments it may be a direct drive connection. In still other embodiments, a manual input may be used instead of or in addition to a motor.

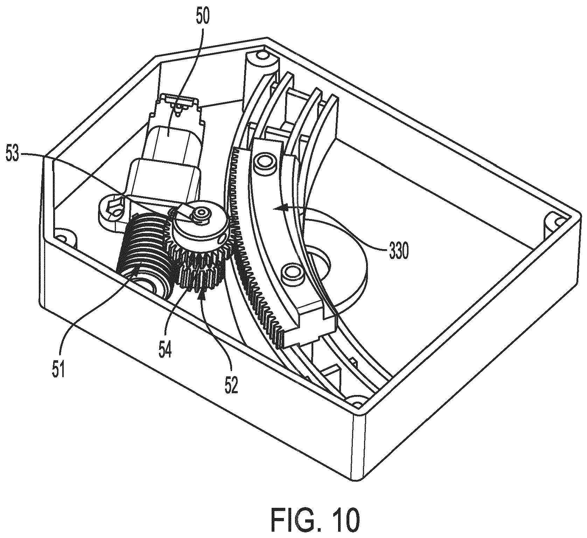

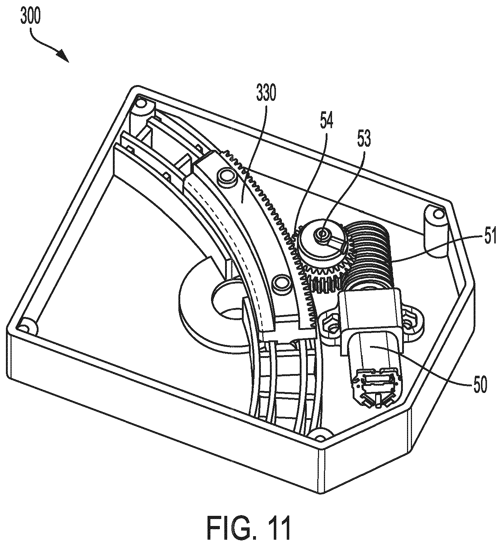

Figs. 10 and 11 are perspective internal views of the rotational base 300. As shown, the rotational base includes a motor 50. The motor 50 may be a micro motor. Additionally, there may be a quadrature encoder. The motor 50 drives a worm gear 51. The worm gear 51 drives a worm wheel 52. The worm wheel 52 is on a shaft 53 with a spur gear 54 so that when the worm wheel 52 rotates, the spur gear 54 likewise rotates. The spur gear 54 engages the arc gear 330. Accordingly, when the motor 50 is actuated, the arc gear 330 is moved to cause actuation of the laser level 110 about cross point 151, as described above. The motor 50 may rotate in a forward or reverse direction to move the arc gear 330 back and forth. In some embodiments, a transmission may be operably connected to the motor 50. In embodiments a clutch is operably connected to the motor 50.

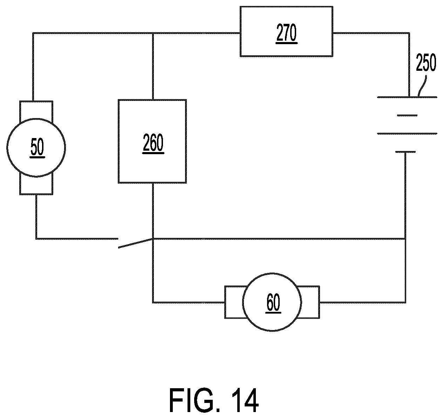

Fig. 14 illustrates a schematic diagram. A battery 250 is connected to controller 260, motor 50 and wireless transceiver 270. The controller 260 may include a microprocessor. The wireless transceiver 270 may receive wireless control signals from a user. The wireless control signals may be from a dedicated remote controller or from a computing device such as a tablet, computer or smartphone. The controller 260 may operate the motors 50 and 60 in accordance with the wireless control signals. In other embodiments, inputs for the control signals may be made from a wired connection or user input on the laser level assembly 10. In some embodiments, control signals may be provided wirelessly or from on-board user input on the laser level assembly 10. Motor 60 may be likewise connected to the battery 250 and controller 260. Motor 60 may be the motor disposed in the mount 200 for rotation about central axis A. Motor 60 may be similarly controlled by the controller 260 in accordance with user inputs. Wireless signals may be, for example, Wi-Fi signals, infrared signals, radio frequency (RF) signals or may use a Bluetooth protocol.

The battery 250 may be an internal battery or a removable power tool battery pack such as is generally known in the power tool construction space and may be compatible with other tools, such as drills, saws, sanders and impact drivers and power such tools. For example, the battery pack 250 may be of the type shown and described by U.S. Patent No. 8,092,932; US Patent No. 7,719,234; or U.S. Patent No. 6,729,413. U.S. Patent No. 8,092,932; US Patent No. 7,719,234; and U.S. Patent No. 6,729,413 are hereby incorporated by reference in their entireties. If the battery 250 is a removable battery pack, it may be slidingly engaged on the laser level 100 or a portion of the mount 200. If disposed on the mount 200, the removable battery pack may be disposed on the bottom of the mount 200, between the mounting portion 203 and the laser level 100 and base 300, or at another location. Cables such as wires may transfer electrical power from the battery pack 250 to the various components of the laser level assembly 100, including to any laser diodes, controllers, motors, or other electrical components. Electrical connections may be made by other means. The battery pack 250 may include lithium-ion battery cells, though embodiments are not limited thereto.

In some embodiments, there may be more than one battery pack or battery that may provide power to one or more electrical components. For example, in some embodiments, there may be an internal battery for powering laser diodes and a removable battery pack for powering motors. Other embodiments may have the reverse in which an internal battery pack powers the motors and a removable battery pack powers the laser diodes. In other embodiments, there may be multiple internal batteries for powering various components. In some embodiments, a removable battery pack may power both the laser diodes and the motors and a separate battery, such as an internal battery, may power one or more of a controller or a wireless transceiver.

Internal batteries may be located in any suitable component such as the mount 200, base 300 or the laser level 100. Similarly, the controller 260 and wireless transceiver 270 may be disposed in any suitable location or component, and electrical connections made as necessary throughout the laser level assembly 10.

In some embodiments, the laser level 100 may be a different type of laser level other than a 3 x 360 laser level. For example, the laser level may be a cross line laser level. The laser level may project a variety of beams or dots.

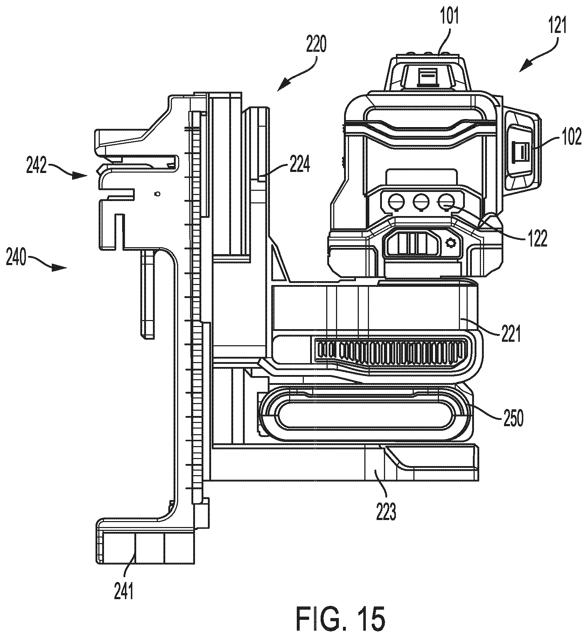

Figs. 15-29 illustrate exemplary embodiments of laser level assemblies that incorporate vertical movement. The vertical movement allows the height of a laser level beam to be adjusted by a user. For example, a horizontal line projected by a laser level may be moved up or down to create a horizontal line higher or lower on a wall. Various features of the exemplary embodiments of Fig. 15-29 may be combined or integrated with previously described embodiments. Also, like the previously described exemplary embodiments, the laser level is described with respect to a 3 x 360 laser level that projects one horizontal and two vertical beams. However, other laser levels with various lines and dots, including cross-lines, and plumb dots, may be utilized.

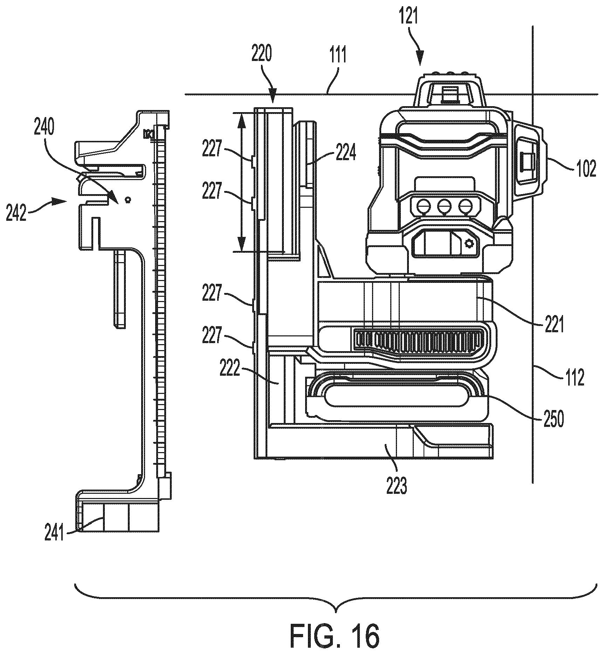

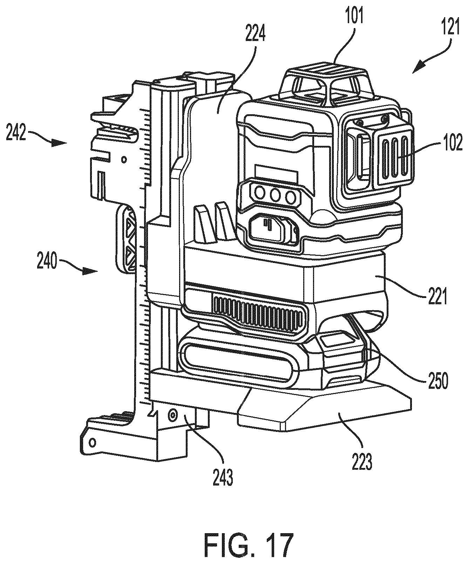

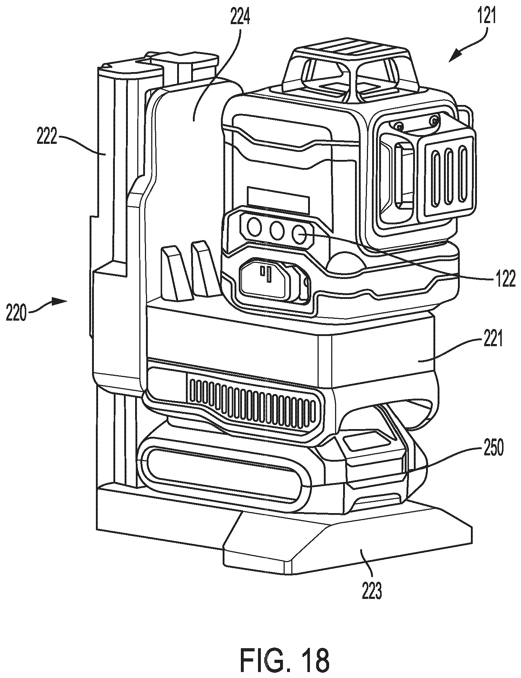

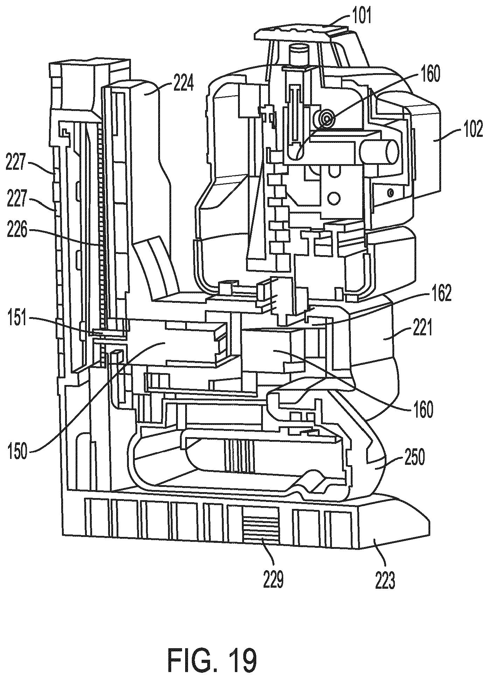

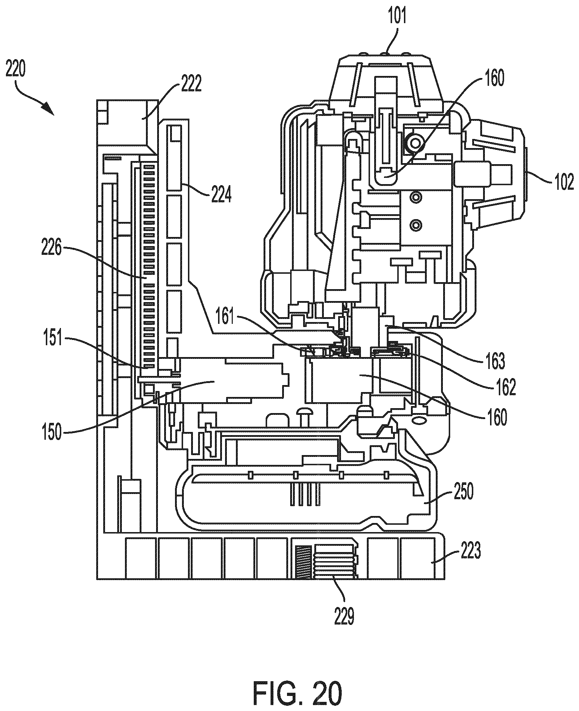

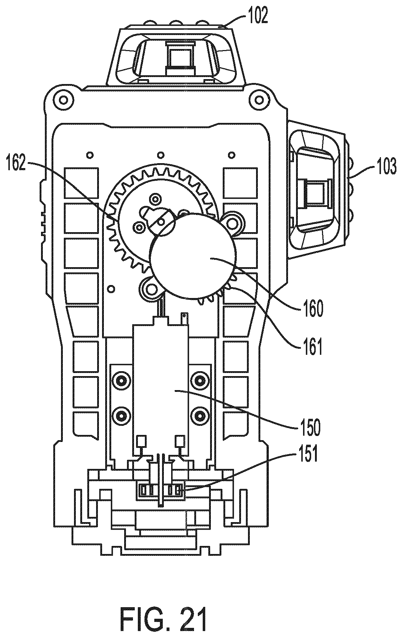

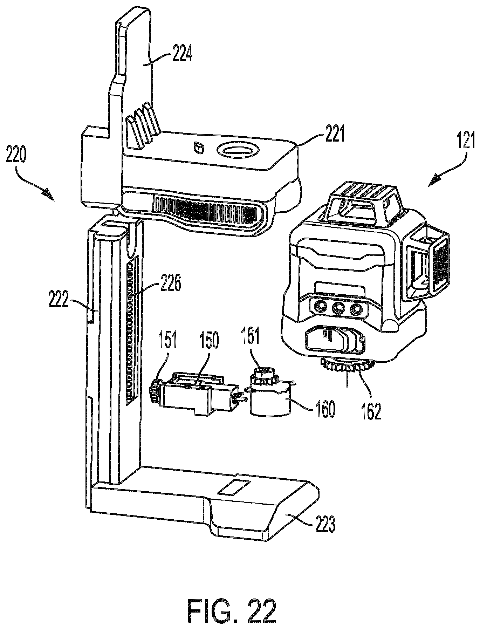

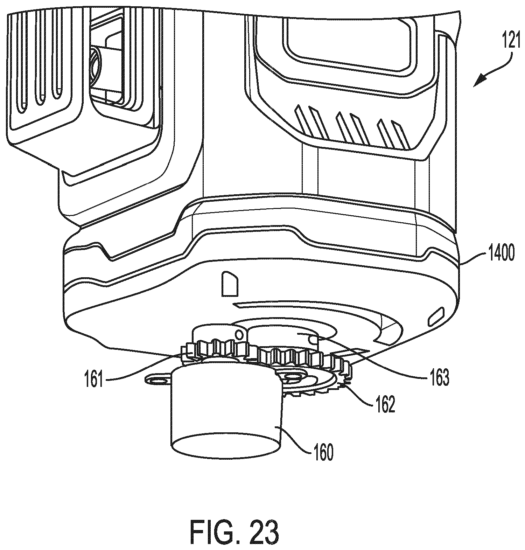

A first exemplary embodiment of a vertically translating laser level assembly 11 is shown in Figs. 15-23. Fig. 15 illustrates a side view of the laser level assembly 11. Fig. 16 is a side view of the laser level assembly 11, with the ceiling wall mount 240 separated from the mounting bracket 220. Fig. 17 is a perspective view of the laser level assembly 11 with the ceiling wall mount 240. Fig. 18 is a perspective view of the laser level assembly 11 without the ceiling wall mount 240. Fig. 19 is a perspective cut-away view of the laser level assembly of Fig. 18. Fig. 20 is a side cut-away view of the laser level assembly. Fig. 21 is a bottom cut-away view of the laser level assembly 11 through a portion of the bottom of the mounting bracket 220. Fig. 22 is an exploded view of parts of the laser level assembly 11. Fig. 23 is a close-up view of a rotational driving feature of the laser level assembly 11.

As shown in Figs. 15, the laser level system 11 includes a laser level 121. The laser level 121 is generally similar to the laser level 100 of Fig. 1. In general, parts of laser level 121 should be assumed to be the same as laser level 100 unless otherwise shown or described. In the exemplary embodiment of Fig. 15, the laser level 121 has a different bottom section 400 than the laser level 100 of Fig. 1. It is specifically contemplated that the laser level assembly 11 of the embodiment of Fig. 15 may include the base portion 400 and rotational base 300 of the embodiment of Fig. 1 so as to facilitate rotation about two different axes, as described above. In that instance, the laser level would be able to travel vertically and rotate about both a central axis and a cross-point axis. The laser level 121 may be removably attached to the base 221.

As shown in Figs. 15 and 16, the laser level 121 includes a variety of buttons 122 for user input and control. The buttons 122 may allow the user to turn on and off the various lasers that project out of projectors 101, 102, 103. The buttons 122 may also allow a user to operate rotational or vertical motor control. As discussed above, there may be wireless controls instead of or in addition to such on board buttons 122 serving as user controls. Any function of the laser level 121 or the laser level system 11 may be controlled by one or more of wireless control, on-board controls or wired control. As discussed above, a remote control device for controlling functions wirelessly may include one or more of a dedicated remote control or a computing device such as a smartphone or tablet, though embodiments are not limited thereto. The remote control device may include a user input such as a touchscreen, a keyboard or buttons. The remote control device may include a controller including, for example, a microprocessor. The remote control device may include a display configured to display information about the laser. For example, the remote control device may display whether one or more lasers is activated. The remote control device may display the type of laser. The remote control device may display a state of a battery charge. The remote control device may display a speed of rotation or vertical translation. The remote control device may display a state of rotation or vertical translation. The remote control device may display rotational or vertical position.

As shown in Figs 15 and 16, the laser level system 11 further includes a vertical mounting bracket 220 and a ceiling wall mount 240. The ceiling wall mount 240 may include a clamp 242 for clamping onto a structure such as a pipe, beam or other structure. Additionally, the ceiling wall mount 240 may have a threaded screw hole 241 for mounting to a tripod or other structure.

The vertical mounting bracket 220 includes a base portion 221, a mounting portion 222, a bottom portion 223 and a movable mount portion 224. The laser level 121 and a removable power tool battery pack 250 are mounted on the base portion 221. The mounting portion includes a number of magnets 227. The magnets 227 allow the vertical mounting bracket 220 to be mounted to a surface or the ceiling wall mount 240, which includes a metal plate surface 243. The bottom portion 223 may have a screw thread hole 229 as shown in Figs. 19 and 20 so that the vertical mounting bracket 220 may be mounted to a tripod or other structure.

The removable power tool battery pack 250 may be of various voltages, capacity or sizes. For example, the base portion 221 may receive any of a variety of power tool battery packs in a power tool battery pack system or a sub-set of power tool battery packs of a power tool battery pack system. For example, the distance between base portion 221 and bottom portion 223 may be made large enough to receive all of the battery packs of a particular power tool battery pack system or any of a select number of battery packs of a power tool battery pack system. In some instances, the amount of vertical translation may be affected by the size of the battery pack 250. For example, a large battery pack 250 may limit movement of the base portion 221 towards the bottom portion 223 because the battery pack 250 contacts the bottom portion 223. In this instance, a clutch may help to prevent further movement downward.

In some embodiments, a sensor may sense when a positional limit is reached and prevent further movement of the laser level 121. For example, one or more sensors may sense when a positional limitation has been reached. For example, a sensor including a contact switch may be included on the bottom portion 223 and when the battery pack 250 contacts the contact switch, the controller 260 may prevent further movement or downward movement of the base portion. In some embodiments, the sensor may include a light sensor. In some embodiments, a sensor may include a Hall sensor.

Fig. 17 illustrates the vertical mounting bracket 220 mounted to the ceiling wall mount 240 via magnetic attraction.

Operation of the laser level assembly 11 will be described with respect to Figs. 19 to 23. Fig. 22 illustrates an exploded view of the laser level 121 and vertical mounting bracket 220. Fig. 22 illustrates a motor 150 and pinion 151 driven by the motor 150. Fig. 22 also illustrates a motor 160 and gear 161 driven by motor 160. Although shown separately for illustrative purposes in Fig. 22, motor 150, pinion 151, second motor 160 and gear 161 are housed in the mounting bracket 220, and particularly, the base portion 221 of the mounting bracket 220, as seen in cut-away Figs. 19, 20 and 21. One or both of the motors 150 and 160 may include a clutch. The clutch may be an internal or an external clutch. A clutch may otherwise be attached to the motor or configured to work with the motor.

As also shown in Fig. 22, the mounting bracket 220 also includes a rack 226 in the mounting portion 222. The pinion 151 is engaged with the rack 222. Accordingly, when the motor 150 is activated, the pinion 151 rotates and causes the base 221 and movable section 224 of the mount 220 to move relative to the mounting portion 222. When the motor 150 and pinion 151 are rotated in a first direction, the base 221 moves upwardly and when the motor 150 and pinion 151 are rotated in a second direction, the base 221 moves downwardly. The movable mount portion 224 interacts with the mounting portion 222 to provide smooth sliding support. The mount portion 224 may include a variety of slots, grooves and projections and the mounting portion 222 may include corresponding slots, grooves or projections to facilitate relative sliding. For example, the movable portion 224 may include a pair of projections and the mounting portion 222 may include corresponding slots which receive the pair of projections.

The rack 222 and pinion 151 are also seen in the cut-away views of Figs. 19 and 20. In Figs. 19 and 20, the pinion is at a bottom of the rack and the battery pack 250 is resting near a bottom portion 223 of the mount.

In the exemplary embodiment of Figs. 15-23, the pinion 151 rotates about an axis perpendicular to a work surface on which the mounting portion 222 is mounted. As discussed above, the mounting portion 222 may also be mounted on a metal plate 243 of the ceiling bracket 240. In that case, the pinion 151 rotates about an axis perpendicular to the surface of the metal plate 243. The axis about which the pinion 151 rotates is also perpendicular to the central axis A and parallel to an insertion direction of the battery pack 250.

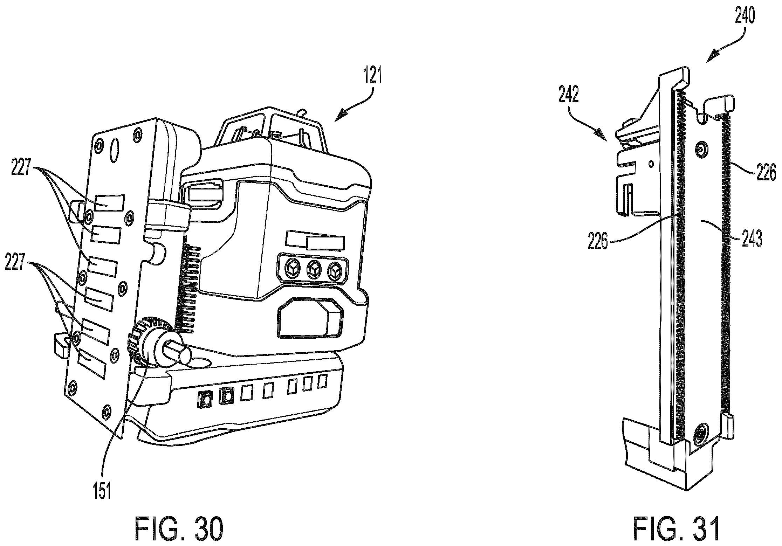

In other embodiments, the pinion 151 and rack 222 may be in different planes. For example, as shown in Figs. 30 and 31, the rack 222 may be on one or both sides of the metal plate 243. Additionally, the pinion 151 may rotate about an axis parallel to a rear surface of the mounting portion 222.

Motor 160 is a configured to rotate the laser level 121. As shown in Fig. 23, motor 160 drives gear 161. Gear 161 meshes with gear 162 so that when the motor 160 rotates, gear 162 rotates. Gear 162 is secured to a cylindrical mount 163 of the laser level 121. Accordingly, the motor 161 drives rotation of the laser level 121. The motor 161 may rotate clockwise or counterclockwise to rotate the laser level 121 in opposite direction.

Motors 150 and 160 may be controlled by controller 260, as previously described. Additionally, the assembly 121 may receive remote wireless signals through a wireless transceiver 270. Electrical connection may be made through the various components to convey electrical power and/or control information through wires or other structures. Battery pack 250 may power the motors 150, 160 any laser generators or other components. As discussed above, additional batteries may be used in some instances to power various components.

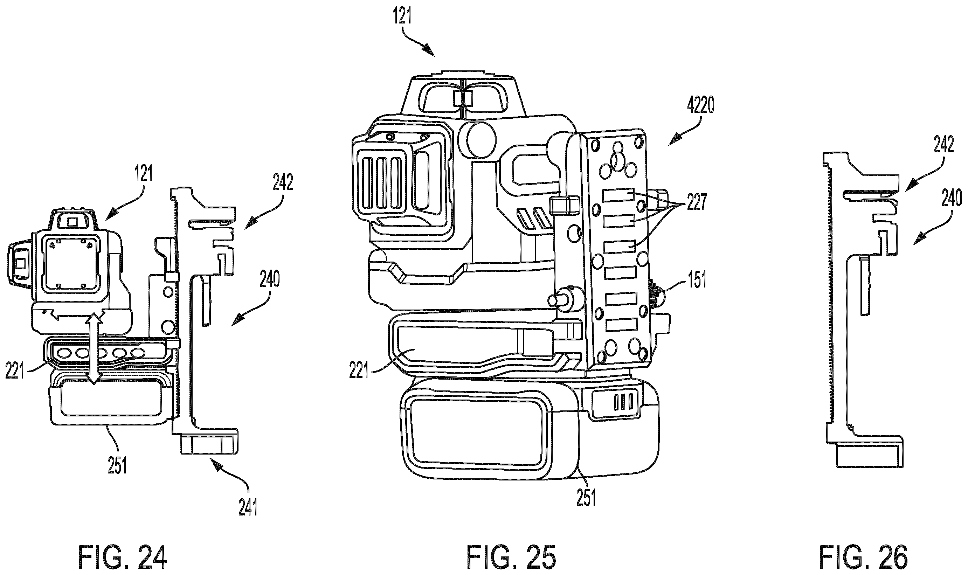

Figs. 24-31 illustrate various different modifications to provide for different configurations. Operation of the vertical translation feature and the laser level generally is the same as in previous embodiments.

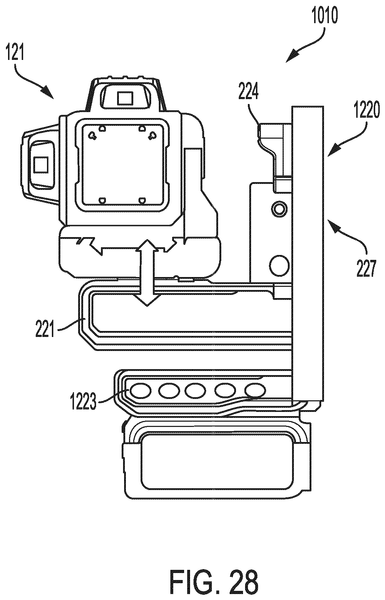

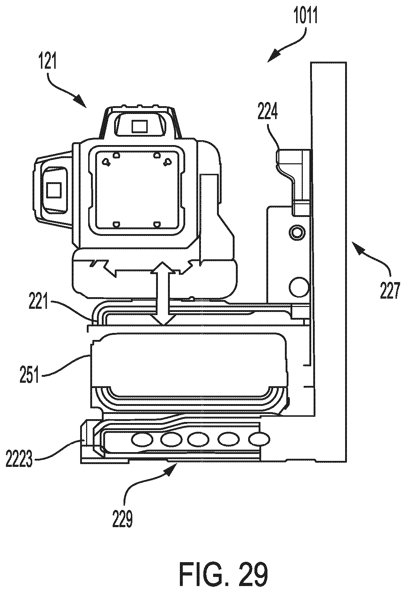

Fig. 28 and 29 illustrate other configurations for a laser level assembly 1010 and 1011 with mounting brackets 1220 and 2220. In Figs. 28 and 29, the battery pack 251 is mounted to a modified bottom portion 1223 and 2223 of the respective mounting brackets 1220 and 2220 rather than to the mounting portion 221. The battery pack 251 may be mounted to a bottom of the modified bottom portion 1223 so that the battery pack 251 is generally below the bottom portion 1223, as shown in Fig. 28, or to a top of the modified bottom portion 1223 so that the battery pack 251 is generally above the bottom portion 1223, as shown in Fig. 29. In any event, the controller 260 and transceiver 270 may be housed in any available location of the mount 220 and connections made through conventional means. As shown, the exemplary embodiments of Figs. 28 and 29 include magnets 227. The magnets 227 allow the mounting brackets 1220 and 2200 to be mounted to a metal work surface or to a ceiling mount such as ceiling mount 240 with a metal plate 243.

Figs. 24, 25, 26, 30 and 31 illustrate another exemplary embodiment. the previously described exemplary embodiments, a motor causes one portion of the mounting bracket moved relative to another portion of the mounting bracket. In the exemplary embodiment of Figs. 24, 25, 26, 30 and 31, a motor moves the mounting bracket 4220 relative to a ceiling mount 240. In this instance, motor 150 drives a pinion 151. The pinion 151 is located in a position to engage a rack located on the ceiling mount 2240. As shown, the rack 226 is on either side of a metal plate. Accordingly, the mounting bracket 4220 may be secured to the metal plate 243 of the ceiling mount 240. This brings the motor driven pinion 151 into engagement with a rack 222 on the ceiling mount 240. When the motor 150 drives the pinion 151, the mounting bracket 4220 is moved up and down relative to the ceiling mount 240. A sensor may be used to determine a location of the mounting bracket 4220. For example, a magnetic sensor may be included on the ceiling mount 240 and a magnet for providing a signal to the magnetic sensor may be included on the mounting bracket 4220. The sensor may be used to help control the vertical movement of the mount 240 and may be used to provide information about a vertical location to a user. For example, the sensor may be used to sense when a top or bottom position is reached and the controller 260 may then prevent further movement. As shown in, for example, Figs. 24, 26 and 31, physical projections may also limit upward and downward movement of the mounting bracket 4220.

In this embodiment, the mounting bracket 4220 is somewhat simplified because it does not require parts that are vertically movable with respect to one another. Instead, the mounting bracket 4220 is a simple L-shaped bracket with an added motor 150 and pinion 151. This embodiment uses a larger battery pack 251 which serves the same function as the battery pack 250. Either battery pack 250 or 251 may be used in this and other embodiments and the mount 221 may accept battery packs of a variety of sizes, types or voltages. As shown in, for example, Figs. 24 and 25, the battery pack 251 may be mounted to the mounting portion 221 and there may be empty space below the battery pack 251. The mount 4220 may include a plurality of magnets 227. The magnets 227 may have a rectangular shape. As shown, the magnets 227 may be mounted on a portion transverse to the mounting portion 221.

The modified mount 4220 includes a pinion 151 that rotates about an axis parallel to a rear surface of the mounting portion.

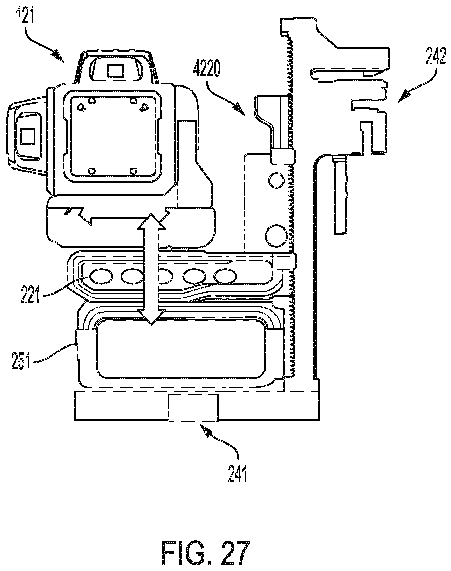

Fig. 27 is another exemplary embodiment. The exemplary embodiment of Fig. 27 is the same as the exemplary embodiments of Figs. 24, 25, 26, 30 and 31, except that the tripod mount 241 of the ceiling bracket 240 is in a different location below the battery pack 251 and base portion 221 of a mount.

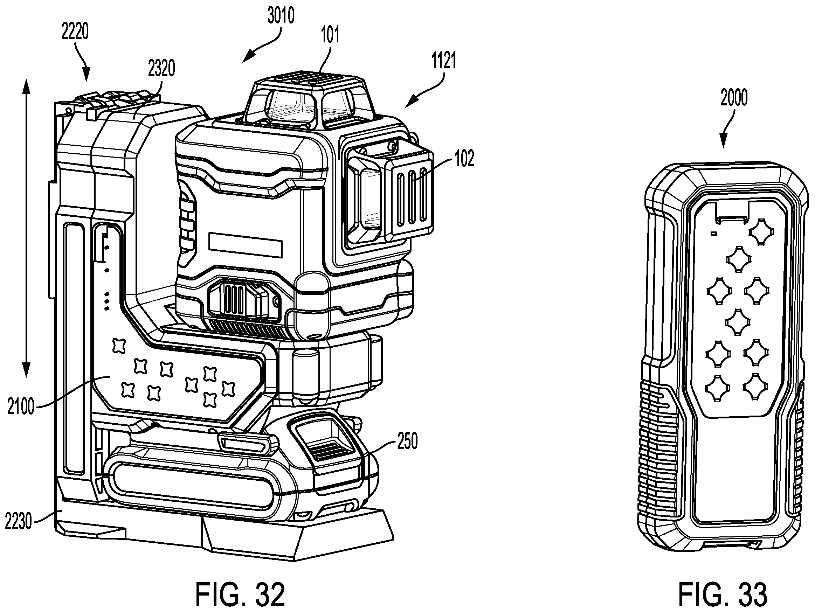

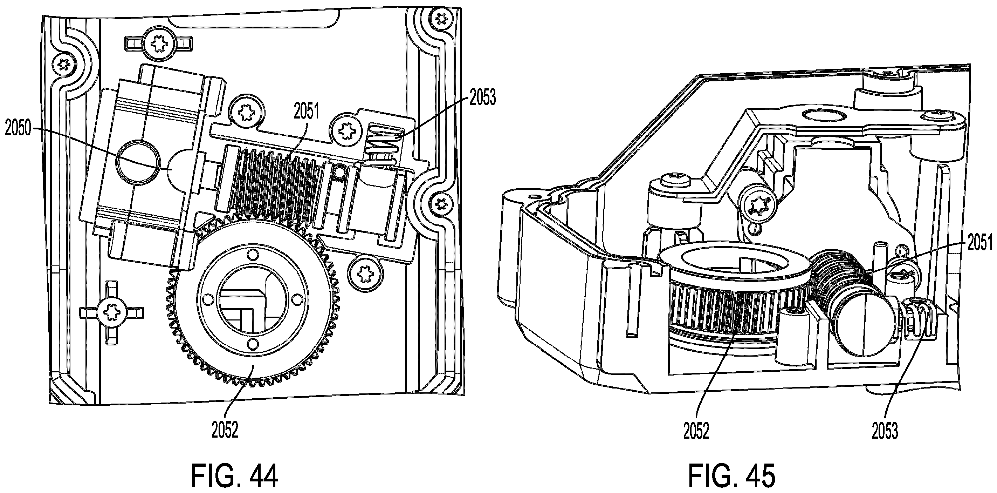

Figs. 32-47 illustrate another exemplary embodiment of a laser level assembly 3010. The laser level assembly 3010 has components, elements, parts and functions similar to other exemplary embodiments unless otherwise shown or described. Additionally, components, elements, parts and functions of the exemplary embodiments may be substituted or combined as applicable.

As shown in Fig. 32, the laser level assembly 3010 includes a laser level 1121. The laser level 1121 has the same basic operation as previous exemplary embodiments of laser levels, such as laser levels 100 and 121. Laser level 1121 of the exemplary embodiment is a 3x360 laser level includes laser module 160 and projects three laser lines 111, 112 and 113. In other exemplary embodiments, the laser level 1121 may be another type of laser level and may project other lines and dots/spots. For example, the laser level 1121 may be a cross-line laser level and project a single horizontal laser line and a single vertical laser line. The laser level 1121 may be a cross and spot laser that projects crossing laser lines and at least one laser spot. The laser level 1121 may be a spot laser level that projects a number of spots, such as vertically upward and downward projecting spots, a forward projecting spot and left and right side projecting spots.

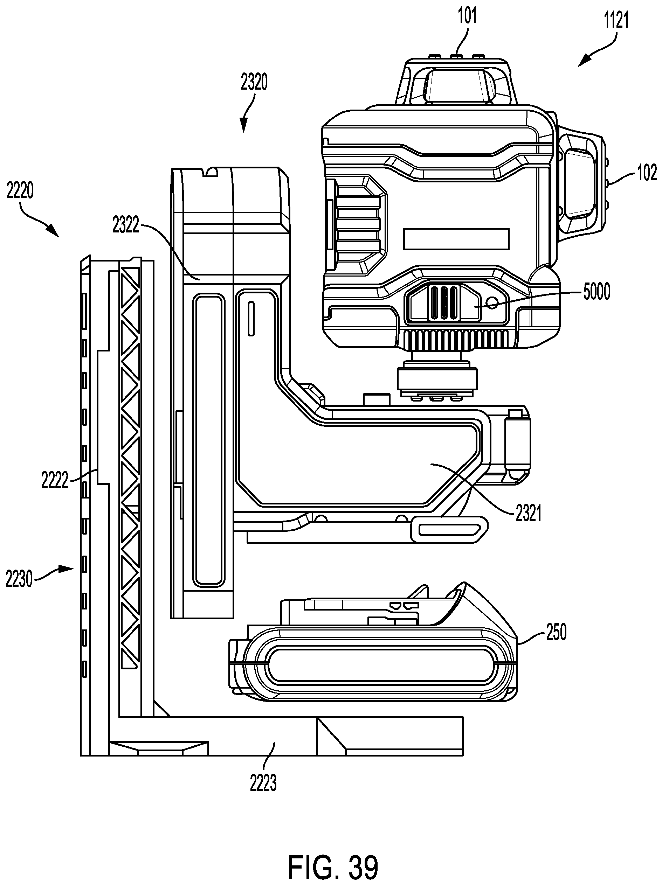

With reference to Figs. 32 and 39, the laser level assembly 3010 further includes a bracket assembly 2220. The bracket includes an attachment mounting bracket 2230 and vertical movement or movable mounting bracket 2320. The attachment mounting bracket 2230 includes a mounting portion 2222 and a base portion 2223. The mounting portion 2222 is generally transverse to the base portion 2223. The mounting portion 2223 is configured to be mounted to a structure. In the example embodiment, the mounting portion 2223 includes a plurality of magnets for mounting the mounting portion 2223 to an object. The mounting portion may alternatively or additionally include other mounting features, such as a clamp or strap.

The vertical movement mounting bracket 2320 is attached to the mounting bracket 2230 and translatable relative to the mounting bracket 2230. The movable bracket 2320 includes a base portion 2321 and an interface portion 2322. The interface portion 2322 is generally transverse to the base portion 2321. The laser level 1121 is rotatably connected to the base portion 2321 of the movable bracket 2320. In some embodiments, the laser level 1121 may be removably coupled to the movable bracket 2320. In such an example embodiment various different types of laser levels may be selectively attached to the base portion 2321 of the movable bracket 2320. For example, a 3 x 360 laser level may be removed and a cross-line, cross and spot or spot laser level may be attached to the movable bracket 2320 in its place. Thus, a user may use the same bracket assembly 2220 for a variety of different laser levels.

As shown in, for example, Fig. 32, the movable bracket 2320 may include a control panel 2100. The control panel 2100 may include a variety of buttons for controlling the laser level 1121 and laser level assembly 3010. For example, the control panel may include a power button for turning the laser level assembly 3010 on an off. The control panel 2100 may also include buttons to control operation of the laser lines or spots. For example, each of the laser lines 111, 112, 113 may be controlled separately or together. That is, for example, one button may turn on and off all of laser lines 111, 112, and 113. Also, separate buttons may separately turn on and off laser lines 111, 112, 113 so that any combination of laser lines 111, 112, and 113 may be on at a particular time. Additionally, the control panel 2100 may include buttons for controlling motion of the laser level assembly 3010. For example buttons may be included for controlling up and down movement of the movable bracket 2320 relative to the mounting bracket 2230. Control panel 2100 may also include buttons for controlling rotation of the laser level 1121 relative to the movable bracket 2320. Control panel 2100 may be used to control speed and direction of movement. Control panel 2100 may also be used to control intensity of the laser lines 111, 112, 113. As shown in Fig. 33, in the example embodiment there may also be a remote control 2000. The laser level assembly 3010 may additionally or alternatively be controlled by remote control 2000. That is, all of the functions described above with respect to the control panel 2100 may be implemented additionally or alternatively on the remote control 2000. For example, the remote control 2000 may be used to turn on and off each of the laser lines 111, 112, 113 and the intensity of the laser lines 111, 112, 113. The remote control 2000 may communicate with the laser level assembly 3010 wirelessly through one or more of a radio frequency (RF), infrared signal, WiFi, or a Bluetooth protocol, for example. The remote control 2000 may have a separate power source such as alkaline batteries.

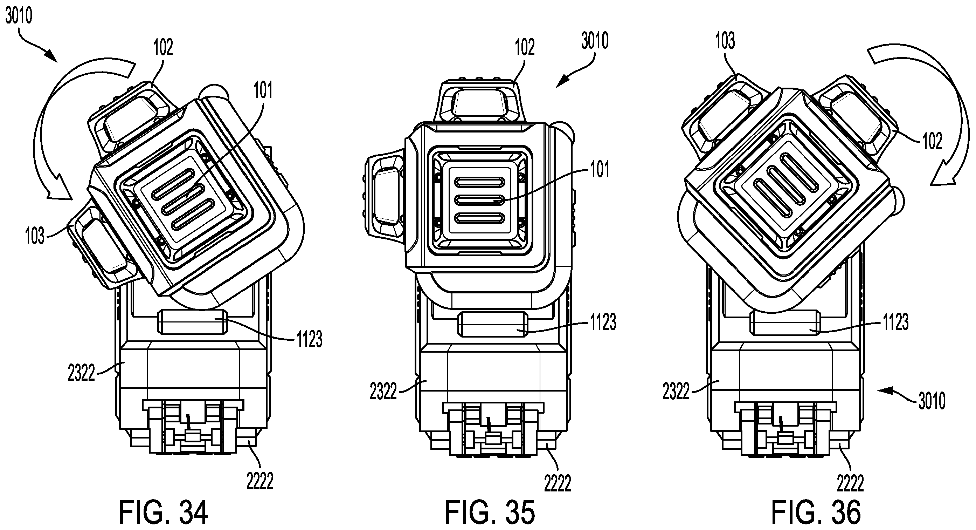

Figs. 34-36 illustrate rotation of the laser level 1121 relative to the mounting bracket 2220. Fig. 35 illustrates the laser level 1121 in a central position. In this central position, laser projector projects a laser line beam 112 generally parallel to a rear surface of the mounting bracket 2220 and laser line projector 103 projects a laser line beam 113 generally perpendicular to a rear surface of the mounting bracket 2220. Accordingly, if the mounting bracket 2220 is mounted to a flat vertical wall, laser line beam 112 will be projected generally parallel to the wall and laser line beam 113 will be projected generally perpendicular to the wall.

Fig. 34 illustrates laser level 1121 rotated to the left (counter-clockwise) and Fig. 36 illustrates laser level 1121 rotated to the right (clockwise). As shown, the bracket 2220 may include a stop 1123. The stop may limit rotational movement of the laser level 1121. As shown, in Figs. 34 and 36, a portion of the laser level 1121 may hit the stop 1123 and limit further movement. Rotational movement may also be limited by a controller such that the controller limits rotational movement to a certain range. The range of rotational movement of the laser level 1121 may be, for example, in a range of 5 to 90 degrees; 10 to 90 degrees 10 to 85 degrees; 15 to 60 degrees; 15 to 80 degrees, or 20 to 75 degrees.

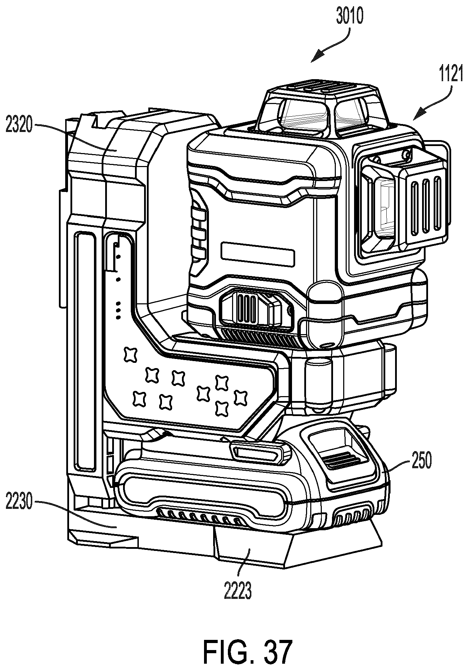

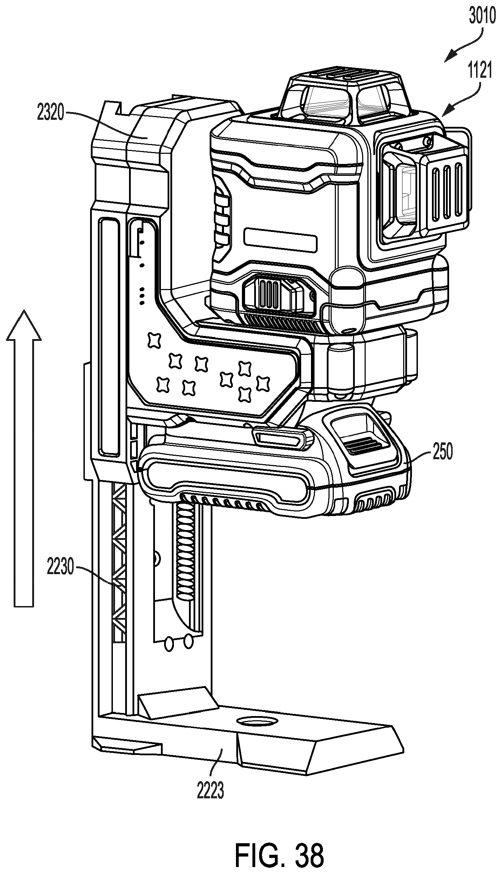

As shown in Figs. 37 and 38, the movable mount 2320 is translatable relative to the mounting bracket 2230. Since the battery pack 250 is removably attached to the movable mount 2320 and the laser level 1121 is mounted to a base of the movable mount 2320, the laser level 1121 and the battery pack 250 also translate along with the mounting bracket 2320. In particular, the movable mount 2320 is movable in a vertical direction up and down.

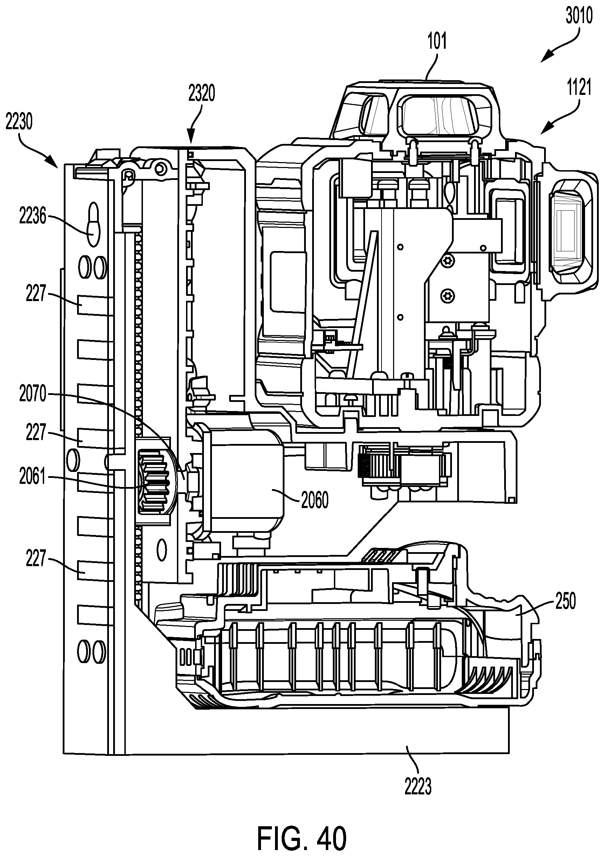

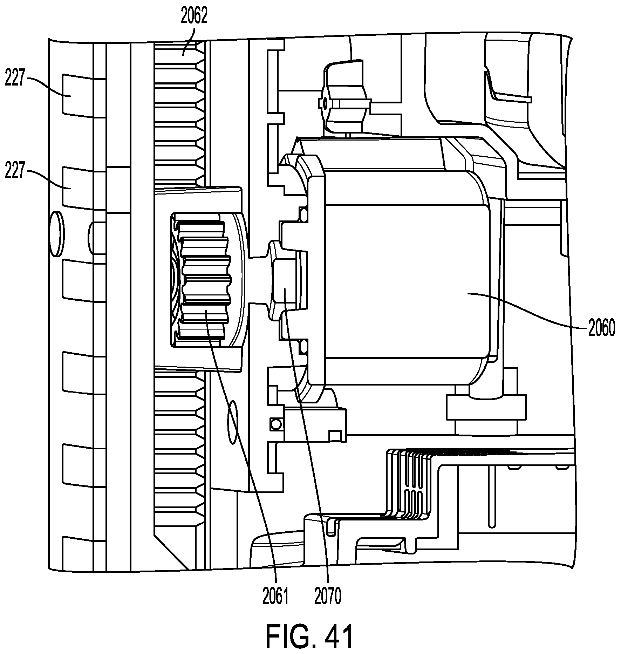

Fig. 40 is a cross-sectional view of the laser level assembly 3010 and Fig. 41 is a close-up cross-sectional view of a portion of the laser level assembly 3010 including a rack 2062 and pinion 2061.

As shown in Figs. 40 and 41, a motor 2060 is housed it the movable mount 2320. The motor 2060 may be a stepper motor. The motor has a clutch 2070. A pinion 2061 is attached to an output of the motor 2060 and driven by the motor 2060. The pinion 2061 has gear teeth engaged with rack 2062. Accordingly, as the motor 2060 rotates in a first direction the pinion 2061 rotates in a first direction and moves the movable mount 2320 upwardly. When the pinion rotates 2061 in a second direction, opposite the first direction, the movable mount 2320 moves downwardly. Accordingly, operation of the motor 2060 causes upward and downward movement of the mount 2320 and so the laser level 1121 on the mount 2320. As discussed above, the motor 2060 may be controlled by the user through one or both of the control panel 2100 or the remote control 2000.

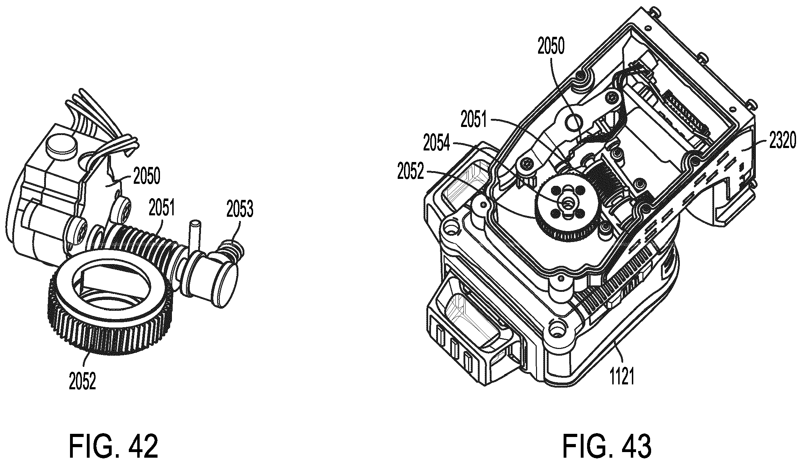

Figs. 42 to 45 illustrate components for facilitating rotational movement of the laser level 1121 relative to the movable mount 2320 and, in particular, relative to the base 2321 of the movable mount 2320. As shown, a stepping motor 2050 is mounted in the base 2321 of the movable mount 2320. The stepping motor 2050 drives a worm which may also be referred to as a worm screw. The worm screw 2051 drives a worm wheel 2052, which may also be referred to as a worm gear 2052. A spring 2053 biases the worm screw 2051 toward the worm wheel 2052 to facilitate contact between the teeth of the worm wheel 2052 and the worm screw 2051. The laser level 1121 is operatively connected to the worm wheel 2052 so that as the worm wheel 2052 rotates, the laser level 1121 rotates along with the worm wheel 2052. For example, a shaft 2054 may be fixedly connected to the worm wheel 2052 and the laser level so that the shaft 2054 rotates with the worm wheel 2052 and the laser level 1121 rotates along with the shaft 2054. In this manner, rotation of the second stepping motor 2050 causes rotation of the laser level 1121, as shown in Figs. 34-36. As shown, a rotational axis and longitudinal axis of the worm screw 2051 is disposed at an angle. That is, in an example embodiment, the rotational axis and longitudinal axis of the worm screw 2051 are not parallel or perpendicular to a rear surface of the mounting bracket 2220 that is attached to a wall.

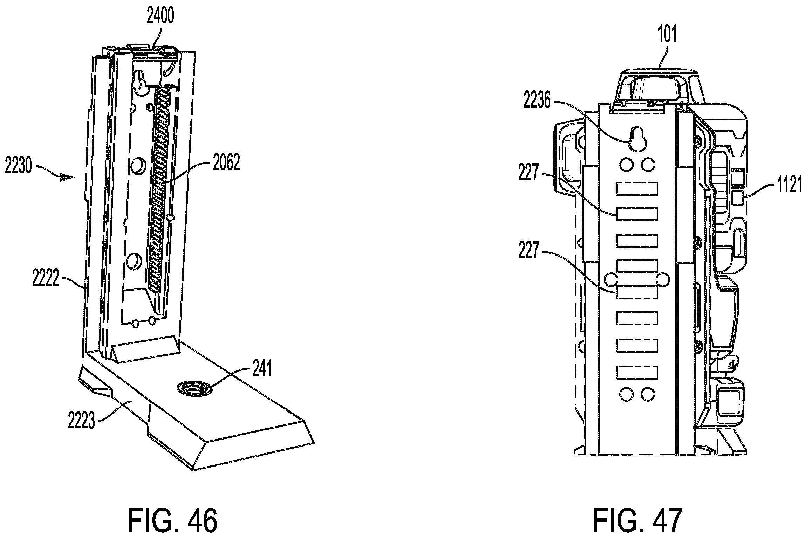

Fig. 46 illustrates the attachment mounting bracket 2230. As shown, the attachment mounting bracket 2230 may include a screw thread 2235 for mounting to a tripod or other mount. The attachment mounting bracket 2230 may also include a key hole 2236 for hanging on a screw or a nail. As also shown in Fig. 47, a rear surface of the attachment mount 2230 may include a plurality of magnets 227.

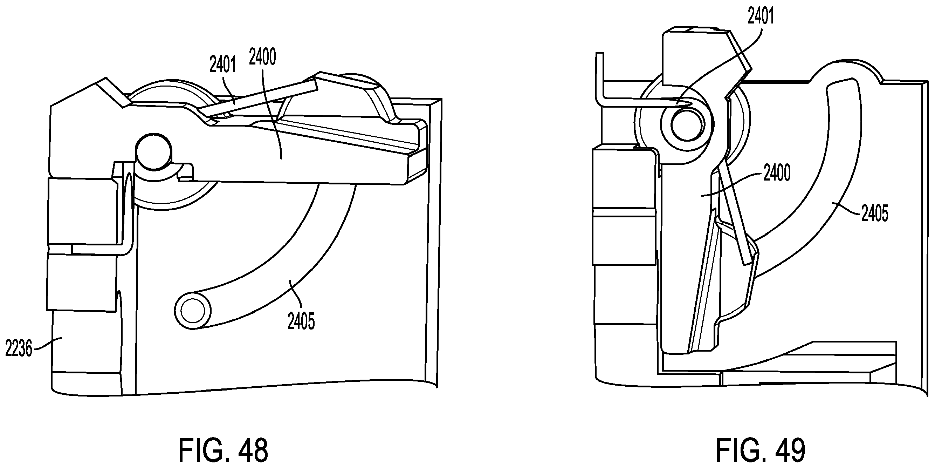

As shown in Fig. 46, there is a door 2400 at the top end of the rack 2062. The door 2400 selectively blocks the pinion 2061 from further upward movement. Figs. 48 and 49 illustrate close-up view of the door 2400. The door 2400 is in a closed position in Fig. 48 and an open position in Fig. 49. When the door 2400 is in the closed position as shown in Fig. 48, when the door prevents the pinion 2061 from moving further upward and so the movable bracket 2320 is connected to the attachment bracket 2230. That is, in the example embodiment, when the door 2400 is in the closed position of Fig. 48, the movable bracket 2320 and the attachment bracket 2230 remain connected.

In contrast, in the example embodiment, when the door 2400 is moved to the open position shown in Fig. 49, upward movement of the pinion 2061 is not prevented. Accordingly, the pinion 2061 can be moved upwardly out of engagement with the rack 2062 and the rack area and the movable bracket 2320 can be removed from the attachment bracket 2230. Accordingly, the movable bracket 2320 and laser level 1121 may used without the attachment bracket 2230. Additionally, a different movable bracket 2320 and laser level 1121 may be then engaged with the attachment bracket 2230. For example, a different type of laser level may be used with the attachment bracket, such as a line and spot laser.

As shown in Figs. 48 and 49, the door 2400 is biased towards the closed position of Fig. 48 by a spring 2401. Additionally, the attachment bracket 2230 includes a groove 2405. The door 2400 may have a protrusion that engages the groove 2405. The groove 2405 and protrusion may provide support and guidance for rotation of the door 2400 between the open and closed positions.

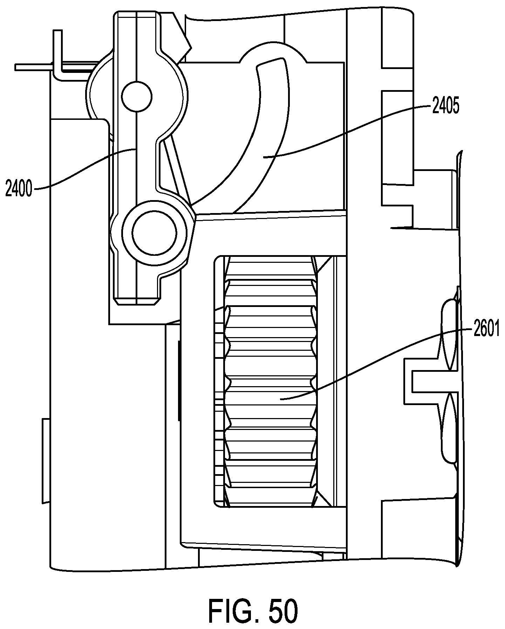

Fig. 50 illustrates the door 2400 in the open position and the pinion 2601 in a position adjacent to the open door 2400.

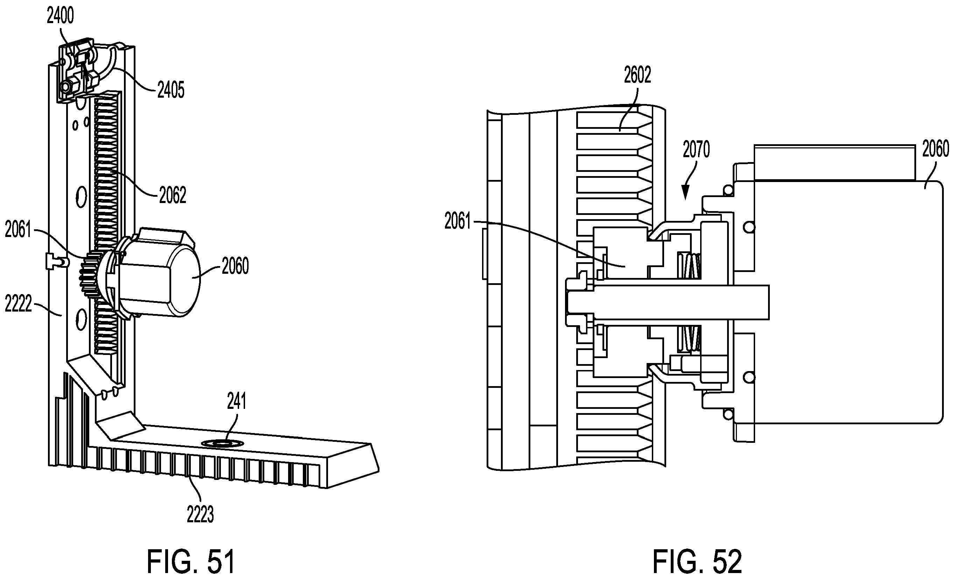

Fig. 51 is a perspective illustrative view of the motor 2060 and pinion 2061 engaged with one side of a rack 2062. A portion of the attachment bracket 2230 is removed for illustrative purposes. In the exemplary embodiment, the rack 2062 may include gear teeth on a single side along a single vertically extending axis. In other example embodiments, the rack may include gear teeth on opposite sides. That is, two sets of teeth extending along vertical lines and opposite to one another. In Fig. 51, the door 2400 is shown in the open position.

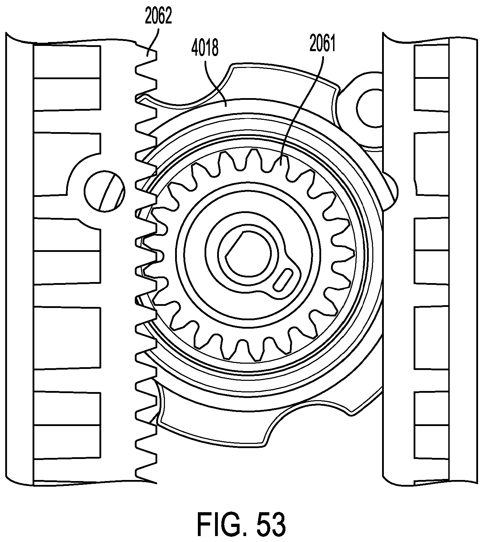

Fig. 52 is a cross-sectional view illustrating engagement of teeth of the pinion 2061 and the rack 2062 as well as the clutch 2070. Fig. 53 is another cross-sectional view illustrating engagement of teeth of the pinion 2061 and the rack 2062.

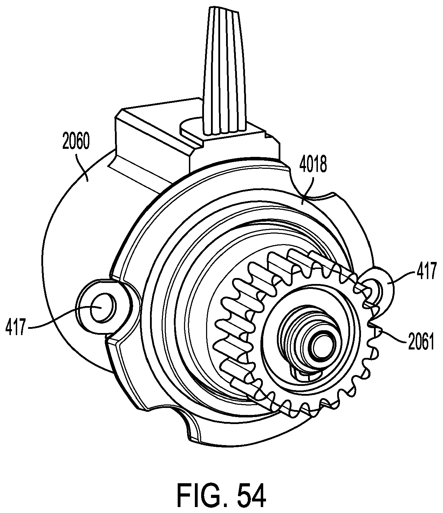

Fig. 54 illustrates a perspective view of the motor 2060 and pinion 2061.

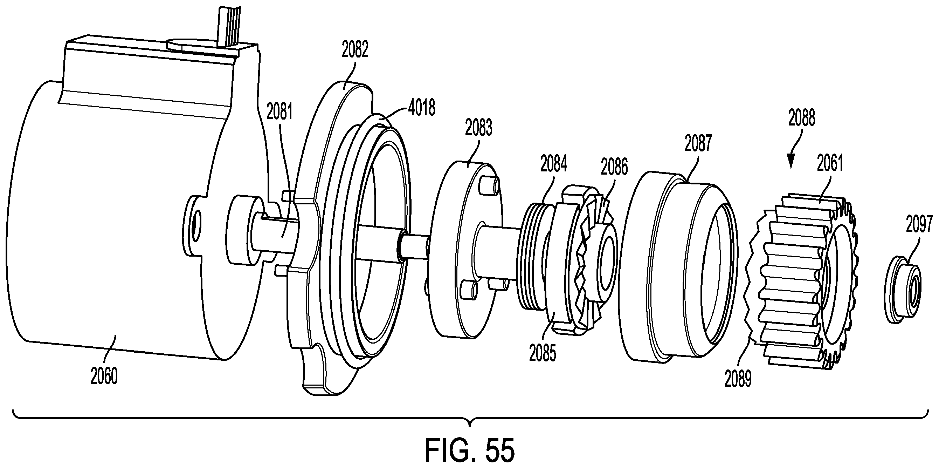

Fig. 55 is an exploded view of the motor 2060 and clutch 2070. The clutch 2070 disengages if torque on the pinion 2061 exceeds a particular amount, such as exceeding 150 millinewtonmeter (mN.m); 200 mN.m, 300 mN.m or 400 mN.m. The clutch may also protect the laser level 1121 in case of a sudden drop. The motors 2050 and 2060 may be stepper motors.

As shown in Fig. 55, there is a motor output shaft 2081 that is selectively driven in a rotational motion. A back cap 2082 is adjacent to the motor 2060, main sleeve 2083 is adjacent to the back cap 2082. Belville springs 2084 maintain engagement of teeth 2086 of a first clutch part 2085 and teeth 2089 of a second clutch part 2088. A rubber boot 2887 provides protection and insulation from dust, debris or liquid. Second clutch part 2088 includes clutch part teeth 2089 and spur gear teeth and serves as pinion 2061. A sleeve bearing supports the motor shaft 2081 on a base bracket. As will be appreciated, the spring 2084 biases first clutch part 2085 towards second clutch part 2088. When the first clutch part 2085 and the second clutch part 2088 are engaged, the teeth 2086 and 2089 are engaged and rotational power from the motor 2060 is transferred to the pinion 2061 such that the pinion 2061 rotates along with rotation of the motor 2060. When sufficient torque is applied, the biasing force of the spring 2084 is overcome, teeth 2086 and 2089 disengage, and torque is no longer transferred between the motor 2060 and the pinion 2061. The clutch 2070 may be integrated into the motor 2060 or clutch parts may be adjacent to the motor. In either event, the clutch 2070 may be operatively between the motor 2060 and the pinion 2061. In embodiments, motor 2050 includes a clutch 2070.

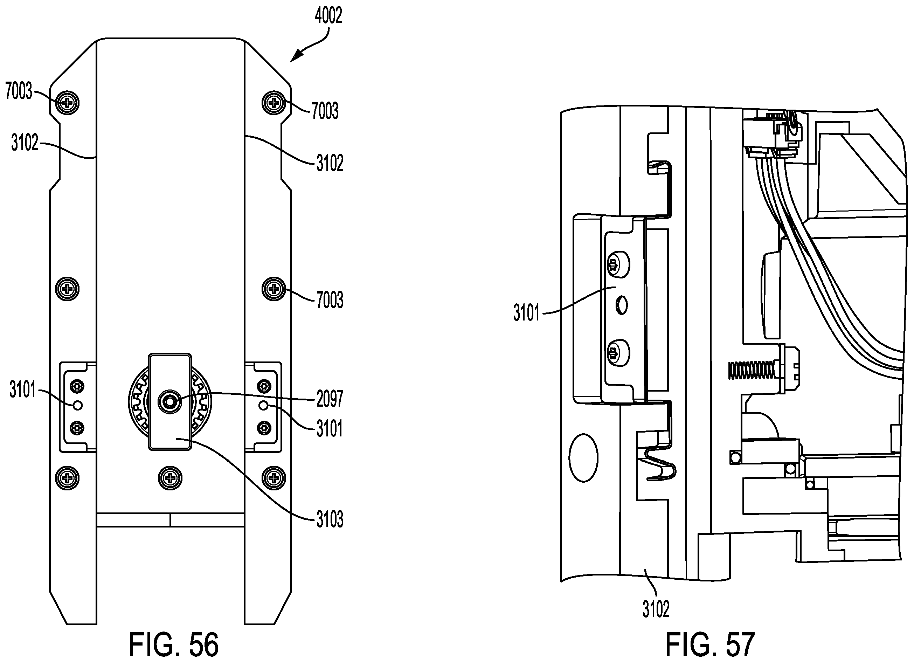

Figs. 56 and 57 illustrate the rear surface of the movable bracket 2320. As shown in Figs. 56 and 57, there are a pair of springs 3101. The springs 3101 bias the movable bracket 2320 away from the attachment bracket 2230 so as to reduce friction and facilitate smooth vertical motion. Additionally, the rear surface of the attachment bracket 2230 includes a vertical guideway 3102 that engages corresponding vertical guideways 3202 on the attachment bracket 2230. As also shown in Fig. 57, a bracket 3103 helps to secure the pinion 2061.

Although the description provided above provides detail for the purpose of illustration based on what is currently considered to be the most practical and preferred embodiments, it is to be understood that such detail is solely for that purpose and that the disclosure is not limited to the expressly disclosed embodiments, but, on the contrary, is intended to cover modifications and equivalent arrangements that are within the scope of the appended claims

It is to be understood that the present disclosure contemplates that, to the extent possible, one or more features of any embodiment can be combined or exchanged with one or more features of any other embodiment.

## Claims

1. A laser level assembly (10, 11, 1010, 1011, 3010), comprising:
a mounting bracket (220, 1220, 2220, 4220) comprising an attachment bracket (2230) and a movable bracket (2320);
a laser level (100, 121, 1121) mounted on the movable bracket, the laser level configured to project at least one of a horizontal line, a vertical line, or a laser spot;
a motor (50, 60, 150, 160, 2050, 2060) in the movable bracket, wherein the motor is configured to drive movement of the movable bracket relative to the attachment bracket; and
a clutch (2070) operatively associated with the motor.

2. The laser level assembly (10, 11, 1010, 1011, 3010) of claim 1, further comprising a pinion (151, 2061) driven by the motor (50, 60, 150, 160, 2050, 2060).

3. The laser level assembly (10, 11, 1010, 1011, 3010) of claim 2, wherein the clutch (2070) is operatively between the motor (50, 60, 150, 160, 2050, 2060) and the pinion (151, 2061).

4. The laser level assembly (10, 11, 1010, 1011, 3010) of any preceding claim, wherein the attachment bracket (2230) comprises a rack (2062).

5. The laser level assembly (10, 11, 1010, 1011, 3010) of claim 4 when directly or indirectly dependent on claim 2, wherein the pinion (2061) is engaged with the rack (2062).

6. The laser level assembly (10, 11, 1010, 1011, 3010) of claim 5, wherein the attachment bracket (2230) further comprises a door (2400) that is movable between an open position and a closed position.

7. The laser level assembly (10, 11, 1010, 1011, 3010) of claim 6, wherein when the door (2400) is in the closed position, the door blocks the pinion (2061) from disengagement from the rack (2062), and wherein when the door (2400) is in the open position, the door does not block the pinion (2061) from disengagement from the rack (2062).

8. The laser level assembly (10, 11, 1010, 1011, 3010) of claim 6 or claim 7, wherein the door (2400) is at a top end of the attachment bracket (2230).

9. The laser level assembly (10, 11, 1010, 1011, 3010) of any preceding claim, wherein the movable bracket (2320) comprises a biasing member that biases the movable bracket away from the attachment bracket (2230) to facilitate movement of the movable bracket relative to the attachment bracket.

10. The laser level assembly (10, 11, 1010, 1011, 3010) of any preceding claim, wherein the attachment bracket (2230) comprises magnets (227).

11. The laser level assembly (10, 11, 1010, 1011, 3010) of any preceding claim, wherein the movable bracket (2320) comprises a battery receptacle configured to receive a battery pack (250, 251).

12. The laser level assembly (10, 11, 1010, 1011, 3010) of any preceding claim, wherein the clutch (2070) comprises a first clutch part (2085) with first teeth (2086) and a second clutch part (2088) with second teeth (2089), wherein the first teeth and second teeth are selectively engaged.

13. The laser level assembly (10, 11, 1010, 1011, 3010) of claim 12 when directly or indirectly dependent on claim 2, wherein the pinion (2061) is integral with the second clutch part (2088).

## Patentansprüche

1. Lasernivellieranordnung (10, 11, 1010, 1011, 3010), umfassend:
eine Montagehalterung (220, 1220, 2220, 4220), die eine Anbringungshalterung (2230) und eine bewegbare Halterung (2320) umfasst;
eine Lasernivellierung (100, 121, 1121), die an der bewegbaren Halterung montiert ist, wobei die Lasernivellierung dazu konfiguriert ist, mindestens eines von einer horizontalen Linie, einer vertikalen Linie oder einen Laserspot zu projizieren;
einen Motor (50, 60, 150, 160, 2050, 2060) in der bewegbaren Halterung, wobei der Motor dazu konfiguriert ist, eine Bewegung der bewegbaren Halterung bezogen auf die Anbringungshalterung anzutreiben; und
eine Kupplung (2070), die mit dem Motor wirkverbunden ist.

2. Lasernivellieranordnung (10, 11, 1010, 1011, 3010) nach Anspruch 1, ferner umfassend ein Ritzel (151, 2061), das durch den Motor (50, 60, 150, 160, 2050, 2060) angetrieben wird.

3. Lasernivellieranordnung (10, 11, 1010, 1011, 3010) nach Anspruch 2, wobei die Kupplung (2070) wirksam zwischen dem Motor (50, 60, 150, 160, 2050, 2060) und dem Ritzel (151, 2061) ist.

4. Lasernivellieranordnung (10, 11, 1010, 1011, 3010) nach einem vorhergehenden Anspruch, wobei die Anbringungshalterung (2230) eine Zahnstange (2062) umfasst.

5. Lasernivellieranordnung (10, 11, 1010, 1011, 3010) nach Anspruch 4, wenn direkt oder indirekt von Anspruch 2 abhängig, wobei das Ritzel (2061) mit der Zahnstange (2062) in Eingriff steht.

6. Lasernivellieranordnung (10, 11, 1010, 1011, 3010) nach Anspruch 5, wobei die Anbringungshalterung (2230) ferner eine Klappe (2400) umfasst, die zwischen einer offenen Position und einer geschlossenen Position bewegbar ist.

7. Lasernivellieranordnung (10, 11, 1010, 1011, 3010) nach Anspruch 6, wobei, wenn sich die Klappe (2400) in der geschlossenen Position befindet, die Klappe das Ritzel (2061) daran hindert, sich von der Zahnstange (2062) zu lösen, und wobei, wenn sich die Klappe (2400) in der offenen Position befindet, die Klappe das Ritzel (2061) nicht daran hindert, sich von der Zahnstange (2062) zu lösen.

8. Lasernivellieranordnung (10, 11, 1010, 1011, 3010) nach Anspruch 6 oder Anspruch 7, wobei sich die Klappe (2400) an einem oberen Ende der Anbringungshalterung (2230) befindet.

9. Lasernivellieranordnung (10, 11, 1010, 1011, 3010) nach einem vorhergehenden Anspruch, wobei die bewegbare Halterung (2320) ein Vorspannelement umfasst, das die bewegbare Halterung von der Anbringungshalterung (2230) weg vorspannt, um eine Bewegung der bewegbaren Halterung bezogen auf die Anbringungshalterung zu erleichtern.

10. Lasernivellieranordnung (10, 11, 1010, 1011, 3010) nach einem vorhergehenden Anspruch, wobei die Anbringungshalterung (2230) Magneten (227) umfasst.

11. Lasernivellieranordnung (10, 11, 1010, 1011, 3010) nach einem vorhergehenden Anspruch, wobei die bewegbare Halterung (2320) eine Batterieaufnahme umfasst, die dazu konfiguriert ist, einen Batteriepack (250, 251) aufzunehmen.

12. Lasernivellieranordnung (10, 11, 1010, 1011, 3010) nach einem vorhergehenden Anspruch, wobei die Kupplung (2070) ein erstes Kupplungsteil (2085) mit ersten Zähnen (2086) und ein zweites Kupplungsteil (2088) mit zweiten Zähnen (2089) umfasst, wobei die ersten Zähne und zweiten Zähne selektiv in Eingriff gebracht werden.

13. Lasernivellieranordnung (10, 11, 1010, 1011, 3010) nach Anspruch 12, wenn direkt oder indirekt von Anspruch 2 abhängig, wobei das Ritzel (2061) einstückig mit dem zweiten Kupplungsteil (2088) ist.

## Revendications

1. Ensemble de niveau laser (10, 11, 1010, 1011, 3010) comprenant :
un support de montage (220, 1220, 2220, 4220) comprenant un support de fixation (2230) et un support mobile (2320) ;
un niveau laser (100, 121, 1121) monté sur le support mobile, le niveau laser étant conçu pour projeter au moins l'un d'une ligne horizontale, d'une ligne verticale ou d'un point laser ;
un moteur (50, 60, 150, 160, 2050, 2060) dans le support mobile, dans lequel le moteur est conçu pour entraîner un mouvement du support mobile par rapport au support de fixation ; et
un embrayage (2070) associé fonctionnellement au moteur.

2. Ensemble de niveau laser (10, 11, 1010, 1011, 3010) de la revendication 1, comprenant en outre un pignon (151, 2061) entraîné par le moteur (50, 60, 150, 160, 2050, 2060).

3. Ensemble de niveau laser (10, 11, 1010, 1011, 3010) de la revendication 2, dans lequel l'embrayage (2070) est fonctionnel entre le moteur (50, 60, 150, 160, 2050, 2060) et le pignon (151, 2061).

4. Ensemble de niveau laser (10, 11, 1010, 1011, 3010) d'une quelconque revendication précédente, dans lequel le support de fixation (2230) comprend une crémaillère (2062).

5. Ensemble de niveau laser (10, 11, 1010, 1011, 3010) de la revendication 4 lorsqu'il dépend directement ou indirectement de la revendication 2, dans lequel le pignon (2061) est en prise avec la crémaillère (2062).

6. Ensemble de niveau laser (10, 11, 1010, 1011, 3010) de la revendication 5, dans lequel le support de fixation (2230) comprend en outre une porte (2400) qui est mobile entre une position ouverte et une position fermée.

7. Ensemble de niveau laser (10, 11, 1010, 1011, 3010) de la revendication 6, dans lequel lorsque la porte (2400) est en position fermée, la porte empêche le pignon (2061) de se séparer de la crémaillère (2062), et dans lequel lorsque la porte (2400) est en position ouverte, la porte n'empêche pas le pignon (2061) de se séparer de la crémaillère (2062).

8. Ensemble de niveau laser (10, 11, 1010, 1011, 3010) de la revendication 6 ou de la revendication 7, dans lequel la porte (2400) est au niveau d'une extrémité supérieure du support de fixation (2230).

9. Ensemble de niveau laser (10, 11, 1010, 1011, 3010) d'une quelconque revendication précédente, dans lequel le support mobile (2320) comprend un élément de sollicitation qui sollicite le support mobile à l'écart du support de fixation (2230) pour faciliter un mouvement du support mobile par rapport au support de fixation.

10. Ensemble de niveau laser (10, 11, 1010, 1011, 3010) d'une quelconque revendication précédente, dans lequel le support de fixation (2230) comprend des aimants (227).

11. Ensemble de niveau laser (10, 11, 1010, 1011, 3010) d'une quelconque revendication précédente, dans lequel le support mobile (2320) comprend un réceptacle de batterie conçu pour recevoir un bloc-batterie (250, 251).

12. Ensemble de niveau laser (10, 11, 1010, 1011, 3010) d'une quelconque revendication précédente, dans lequel l'embrayage (2070) comprend une première pièce d'embrayage (2085) avec de premières dents (2086) et une seconde pièce d'embrayage (2088) avec de secondes dents (2089), dans lequel les premières dents et les secondes dents sont sélectivement en prise.

13. Ensemble de niveau laser (10, 11, 1010, 1011, 3010) de la revendication 12 lorsqu'il dépend directement ou indirectement de la revendication 2, dans lequel le pignon (2061) est solidaire de la seconde pièce d'embrayage (2088).
